# NEUE EUROPÄISCHE PATENTSCHRIFT

(11) **EP 2 639 066 B2**
(45) Veröffentlichungstag und Bekanntmachung des Hinweises auf die Entscheidung über den Einspruch: **19.09.2018**
(45) Hinweis auf die Patenterteilung: 18.03.2015
(21) Anmeldenummer: 12188480.3
(22) Anmeldetag: 15.10.2012
(51) Int. Cl.: B41F 13/58, B41F 13/60, B42D 7/00, B65H 45/06, B65H 45/22

(54) **Verfahren und Vorrichtung zur Herstellung eines Druckproduktes sowie Druckprodukt**
Device and method for producing a printed product and printed product
Procédé et dispositif de production d'un produit d'impression et produit d'impression

(30) Priorität: 14.03.2012 DE 102012203979
(43) Veröffentlichungstag der Anmeldung: 18.09.2013
(73) Patentinhaber: Koenig & Bauer AG, 97080 Würzburg (DE)
(72) Erfinder: Vigo-Nieves, Benito, 97297 Waldbüttelbrunn (DE); Wander, Stefan, 97264 Helmstadt (DE)
(74) Vertreter: Koenig & Bauer AG

(56) Entgegenhaltungen:
- EP-A2- 2 030 932
- WO-A1-2008/142069
- CH-A5- 675 397
- DE-A1- 4 205 452
- DE-A1-102008 015 308
- DE-A1-102008 015 889
- DE-C- 519 811

## Beschreibung

Die Erfindung betrifft ein Verfahren und eine Vorrichtung zur Herstellung eines Druckproduktes sowie ein Zeitungsprodukt gemäß dem Oberbegriff des Anspruches 1 bzw. 9 bzw. 13.

Durch die EP 0 111 170 A2 ist eine Vorrichtung und ein Verfahren zur Herstellung eines mehrblättrigen Druckproduktes bekannt, welches aus mindestens zwei ineinanderliegenden gefalzten Bogen besteht. Zum leichten Öffnen ist der innerste Bogen in Richtung der Falzlinie länger ausgebildet, damit er im Randbereich aus dem übrigen Druckbogen hervorsteht. Nach dem Öffnen und Einbringen von Einlagen wird dieser Rand weggeschnitten.

In der WO 2008/142069 A1 wird ein Produkt mit einer Lage hergestellt, welche einen eingeklappten Randbereich oder einen über das übrige Produkt hinausragenden Randbereich aufweist. Hierzu wird ein Streifen einer Bahn durch einen Formzylinder mit einem Druckbild einer gegenüber der Standarddruckseite breiteren Druckseite eines Sonderformates bedruckt und - mit oder ohne über einen einseitigen Pflugfalz geführt zu werden - um Falztrichter herum geführt und mit einem gefalzten Strang zusammengefasst. Ein Formzylinder kann hierbei für den das Sonderformat bildenden Strang eine von den mit den übrigen Strängen zusammen wirkenden Längenbereich verschieden Breite Druckbildvorlage tragen, welche durch das Druckbild in einem Standardformat und zusätzliche einer schmaleren Druckseite gebildet sein kann.

Die DE 10 2005 031 010 A1 offenbart Verfahren und Vorrichtungen zur Erzeugung von Produkten, in welchen eine gefalzte Sektion einen seitlichen überstand zu einer anderen gefalzten Sektion aufweist. Die Teilbahnen dieser auf zwei Trichtern herzustellenden Sektionen können auf einem selben Formzylinder hergestellt werden, indem auf die die beiden Teilbahnen betreffenden Bahnbreitenabschnitte Druckbilder unterschiedlicher Druckbildbreite aufgebracht werden.

Durch die GB 2 299 970 A ist ein Druckprodukt wie beispielsweise eine Magazinbeilage einer Sonntagszeitung, offenbart, welches ineinander liegende Bogen aufweist, die außerhalb ihrer Mitte derart gefalzt sind, dass die Seitenkanten jeweils benachbarter Druckseiten abwechselnd weiter innen und weiter außen verlaufen. Damit sollen benachbarte Seiten dieser Magazinbeilagen, welche beispielsweise durch elektrostatische Aufladung oder andere Kräfte zusammen "kleben", besser zu blättern sein. Der einzelne Bogen wird dann so gefaltet, dass der Falz außerhalb des Zentrums liegt und die zwei Seiten unterschiedlicher Größe resultieren.

Die DE 10 2007 040 920 A1 offenbart ein Verfahren zum Betreiben einer Rollendruckmaschine, auf welcher anstelle der Verarbeitung einer vollbreiten Bahn, welche nebeneinander vier Seiten einer ersten Seitenbreite umfasst, auch eine teilbreite Bahn, welche nebeneinander eine Anzahl breiterer Seiten umfasst, ermöglicht. Zur Verarbeitung von Teilbahnen mit den breiteren Druckseiten werden die Teilbahnen über Wendestangen in die Flucht äußerer, breiterer Trichterflanken gewendet.

Durch die DE 103 20 249 B4 ist ein Verfahren zur Herstellung eines Druck- oder Papierwerkes, z. B. einer Fernsehprogrammzeitschrift, sowie das hierdurch zu produzierende Werk bekannt. Hierbei wird eine Bahn in unterschiedlich breite Stränge geschnitten, diese auf einer Seite fluchtend und auf der anderen Seite gestaffelt aufeinander gesammelt, quer in mehrlagige Abschnitte geschnitten, quer gefalzt, quergeheftet und schließlich die Ränder beschnitten. Das mittig aufgeschlagene Produkt weist im Kopf- oder Fußbereich ein Register auf. Um die Mitte einfacher auffinden zu können kann der Querfalz außermittig gebildet sein.

Die CH 675 397 A5 und die DE 42 05 452 A1 offenbaren Druckprodukte mit auf einer dem Rückenfalz gegenüberliegenden Seite schuppenartig zueinander verlaufenden Seitenkanten

Der Erfindung liegt die Aufgabe zugrunde, ein Verfahren und eine Vorrichtung zur Herstellung eines Druckproduktes, insbesondere eines Zeitungsproduktes, sowie ein Zeitungsprodukt zu schaffen.

Die Aufgabe wird erfindungsgemäß durch die Merkmale des Anspruches 1 bzw. 9 bzw. 13 gelöst.

Die mit der Erfindung erzielbaren Vorteile bestehen insbesondere darin, dass durch die Vorrichtung und das Verfahren inline ein Produkt, insbesondere ein Zeitungsprodukt geschaffen wird, welches dem Benutzer einen komfortablen und schnellen Zugriff zu, z. B. inhaltlich voneinander verschiedenen, Teilen des Produktes bietet. Das Produkt weist in erfindungsgemäßer Ausführung somit auf einer seiner Seiten ein auch im geschlossenen oder zumindest überwiegend geschlossenen Zustand sichtbares Register auf. Hiefür werden wenigstens zwei Bahnen bzw. Teilbahnen mit ihren Bahnmitten zueinander versetzt, und mit ihren Bahnmitten zu einer selben Seite außermittig zu einer Falzebene, - insbesondere ohne Trichtermittelschnitt - auf einen Falztrichter geführt.

In einer besonders vorteilhaften Ausführung werden bzw. sind zwei an beiden Seitenrändern zueinander in eine selbe Richtung zueinander versetzte Bahnen bzw. Teilbahnen auf den Falztrichter geführt. Damit lassen sich mittels zweier Bogen vier Stufen mit stets aufsteigender oder stets absteigender Seitenbreite, also z. B. vier im geschlossenen Produktzustand sichtbare Registerstufen auf einer selben Produktseite herstellen.

In vorteilhaften Ausführungen können durch versetzt auflaufende Bündel von Bahnen bzw. Teilbahnen zueinander registerartig versetzte mehrlagige Produktabschnitte in einer selben Produktsektion über einem Falztrichter gebildet werden.

Ist der Falztrichter in einer vorteilhaften Weiterbildung mit einer gegenüber einer Standardbreite größeren Breite und/oder quer zum Bahnlauf bewegbar ausgebildet, so können Register umfassende Sonderprodukte mit einem gegenüber einer Standardproduktion größeren Produktformat hergestellt werden.

In einer bevorzugten Ausführung sind Bahn- und/oder Strangleitelemente, z. B. eine Wendeeinrichtung und/oder wenigstens eine mit einer Bahn oder einem Bahnbündel zusammen wirkenden Zugrolle einer Zugvorrichtung und/oder ein Zugelement einer mit einem Strang zusammenwirkenden Zugvorrichtung seitlich zum Bahn- bzw. Strangweg bewegbar ausgebildet.

Die Bahn bzw. Bahnen bedruckende Druckwerke weisen Formzylinder auf, welche im Bahnweg einer paarweise benachbart Sujets von Druckseiten mit in Axialrichtung unterschiedlicher Breite tragen. In erfindungsgemäßer Ausführung sind auf einem mehrfachbreiten Formzylinder wenigstens vier Sujets von Druckseiten nebeneinander angeordnet, von welchen mindestens drei eine in Axialrichtung voneinander verschiedene Breite aufweisen.

Ausführungsbeispiele der Erfindung sind in den Zeichnungen dargestellt und werden im Folgenden näher beschrieben.

Es zeigen:
- Fig. 1: eine schematische Darstellung einer Rollenrotationsdruckmaschine;
- Fig. 2: eine schematische Darstellung der Zylinderbelegung einer Standardproduktion in Broadsheetanordnung;
- Fig. 3: eine schematische Darstellung der Zylinderbelegung einer Standardproduktion in Tabloidanordnung;
- Fig. 4: eine schematische Darstellung einer Ausführung des Verfahrens und der Vorrichtung zur einer Herstellung eines ersten Sonderproduktes;
- Fig. 5: eine exemplarische Darstellung für eine Variante von auf den Falztrichter zu führenden Gruppen versetzter Bahnen;
- Fig. 6: eine Darstellung gemäß Fig. 5 erzeugter Produkte a) in Vorderansicht und b) im Querschnitt;
- Fig. 7: eine exemplarische Darstellung für eine Variante von lediglich einseitig versetzt auf den Falztrichter zu führenden Bahnen oder Gruppen von Bahnen;
- Fig. 8: eine Darstellung gemäß Fig. 7 erzeugter Produkte a) in Vorderansicht und b) im Querschnitt;
- Fig. 9: eine schematische Darstellung einer weiteren Ausführung des Verfahrens und der Vorrichtung zur Herstellung einer ersten Sonderproduktion;
- Fig. 10: eine schematische Darstellung der Zylinderbelegung für eine Sonderproduktion in Broadsheetanordnung;
- Fig. 11: eine schematische Darstellung der Druckseitenanordnung auf der bedruckten Bahn in einer Sonderproduktion in Broadsheetanordnung;
- Fig. 12: eine Darstellung eines gemäß Fig. 4 erzeugten Produktes a) in perspektivischer und b) in Vorderansicht;
- Fig. 13: eine Darstellung eines gemäß Fig. 9 erzeugten Produktes a) in perspektivischer und b) in Vorderansicht;
- Fig. 14: eine schematische Darstellung einer weiteren Ausführung des Verfahrens und der Vorrichtung zur Herstellung einer ersten Sonderproduktion;
- Fig. 15: eine Detaildarstellung einer Weiterbildung der Vorrichtung mit querbeweglichen Rollen bzw. Zugelementen;
- Fig. 16: eine schematische Darstellung einer Variante der Vorrichtung mit einem breiteren Falztrichter;
- Fig. 17: eine schematische Darstellung für eine Ausführung der Vorrichtung und des Verfahrens zur Herstellung einer Sonderproduktion mit Tabloidanordnung der Druckseitensujets;
- Fig. 18: eine schematische Darstellung für eine weitere Ausführung der Vorrichtung und des Verfahrens zur Herstellung einer weiteren Sonderproduktion mit Tabloidanordnung der Druckseitensujets.

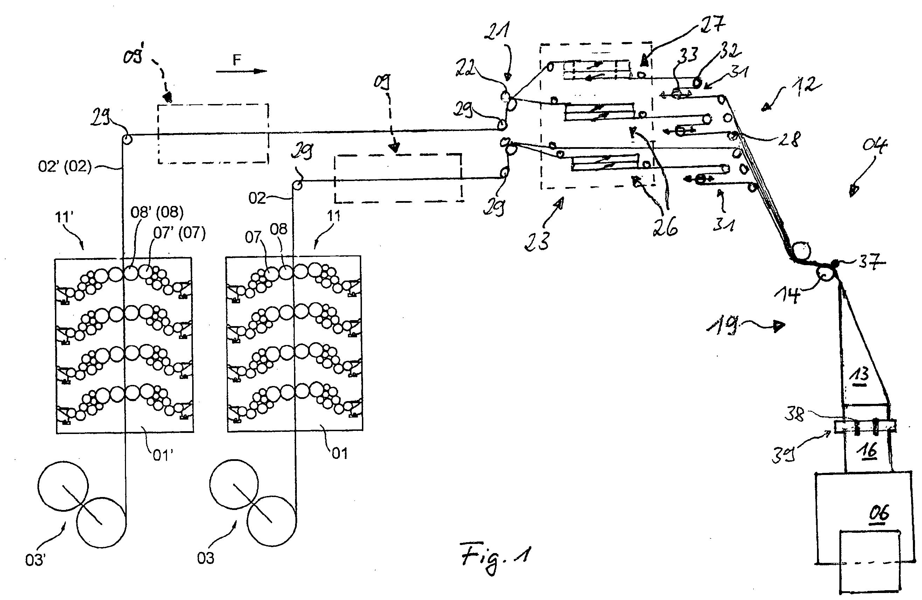

Eine Rollenrotationsdruckmaschine, insbesondere eine als Zeitungsdruckmaschine ausgebildete Rollenoffsetdruckmaschine, weist mindestens eine Druckstellengruppe 01; 01', z. B. Druckwerksgruppe 01; 01', vorzugsweise eine Anzahl I von wenigstens zwei Druckwerksgruppe 01; 01' zum beidseitigen mehrfarbigen Bedrucken jeweils einer Bahn 02; 02', z. B. Papierbahn 02; 02', insbesondere einer ungeschnittener Ursprungsbahn 02; 02' auf (mit I ∈ 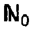 ). Je Bahn 02; 02' bzw. je Druckwerksgruppe 01; 01' ist wenigstens ein Rollenabwickler 03; 03' insbesondere Rollenwechsler 03; 03', vorgesehen, von welchem die jeweilige Bahn 02; 02' abwickelbar und über entsprechende Leitelemente der jeweiligen Druckwerksgruppe 01; 01' zuführbar ist (siehe z. B. Fig. 1). Die Druckwerksgruppen 01; 01' der Zeitungsdruckmaschine zeichnen sich vorzugsweise dadurch aus, dass mehrere mit einer selben Seite einer selben Bahn 02; 02' zusammen wirkende Druckwerke 11; 11' vertikal voneinander beabstandet angeordnet sind und/oder die zu bedruckende Bahn 02; 02' die Druckstellengruppe 01; 01' in überwiegend vertikaler Richtung durchläuft. Eine derartige Druckstellengruppe 01; 01' ist in der als Zeitungsdruckmaschine ausgebildeten Druckmaschine in der Art eines Druckturms 01; 01' ausgebildet, wobei baulich z. B. als Doppeldruckeinheiten, als H-Duckeinheiten oder als Satellitendruckeinheiten ausgebildete Druckstellenuntergruppen ausgebildet sein können. Der jeweilige Druckturm 01; 01' weist vorzugsweise sämtliche für eine beidseitig mehrfarbig, z. B. mindestens vierfarbig zu bedruckende Bahn 02; 02' erforderlichen Druckstellen auf. Für einen beidseitig vierfarbigen Druck weist der Druckturm 01; 01' mindestens acht Einzeldruckstellen oder wie dargestellt mindestens vier Doppeldruckstellen auf. Ggf. können bei geringerer Anforderung an die Farbigkeit auch zwei Bahnen 02; 02' durch Druckwerke 11; 11' eines selben Druckturms 01; 01' durch voneinander verschiedene Druckwerke 11; 11' geführt sein.

Vorzugsweise stehen mindestens zwei oder mehr Drucktürme 01; 01' in einer selben Flucht F, z. B. Maschinenflucht F. Mindestes zwei oder mehr aus den Drucktürmen 01; 01' stammende Bahnen 02; 02' sind gleichzeitig bedruckbar und nach dem Bedrucken zusammen auf einen selben Falzaufbau 04 zur gemeinsamen Weiterverarbeitung in z. B. einem stromabwärtigen Falzapparat 06 (z. B. einem Querfalzapparat zum Querschneiden und Querfalzen des Stranges) führbar.

Grundsätzlich können eine, mehrere oder alle Druckwerksgruppen 01; 01', insbesondere zumindest die bildgebenden Druckwerkszylinder 07; 07', z. B. Formzylinder 07; 07', der Druckwerksgruppen 01; 01', zum gleichzeitigen Drucken von mindestens n bzw. n' = 2 nebeneinander angeordneten Druckseiten Dⱼ⁰ (d. h. "einfachbreit", hier m- bzw. m'-fachbreit mit m bzw. m' = n/2 bzw. n'/2), insbesondere Zeitungsseiten, ausgebildet sein und weisen eine entsprechende Nennweite b_{N} auf. Vorzugsweise sind sie jedoch zum gleichzeitigen Drucken von mehr als zwei nebeneinander angeordneten Druckseiten Dⱼ⁰, insbesondere Zeitungsseiten, z. B. n bzw. n' = 4 (d. h. "doppeltbreit") oder n bzw. n' = 6 (d. h. "dreifachbreit") Zeitungsseiten ausgebildet. Es kann jedoch auch n bzw. n' = 3, 5 oder 7 sein. Generell gilt n bzw. n', m bzw. m' ∈ 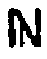 . Die apostrophierten Angaben sind hierbei vorzugsweise den apostrophierten Vorrichtungsangaben, wie z. B. Druckturm 01', Bahn 02' etc., zuzuordnen, während die ohne Apostroph allgemein oder den "ersten" Vorrichtungen zuzuschreiben sind.

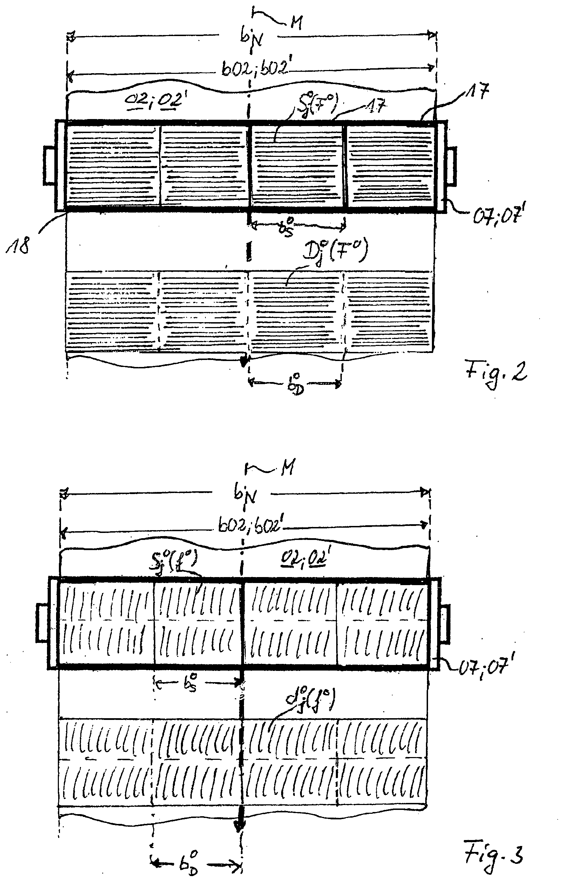

Vorzugsweise sind mindestens zwei Drucktürme 01; 01' zumindest m-fachbreit, z. B. doppelt breit (mit m = 2), ausgebildet. Hierbei weisen die bildgebenden Druckwerkszylinder 07; 07' dieser Druckwerksgruppen 01; 01' eine Nennweite b_{N}, d. h. eine nutzbare Breite auf welche im wesentlichen der Druckbildbreite von n, z. B. n = 4 oder n = 6, nebeneinander angeordneten Druckseiten Dⱼ (dⱼ) bzw. am Druckwerkszylinder 07; 07' angeordneter Druckseitensujets S_{j,i}, kurz Sujets S_{j,i}, eines eine Nennbreite b⁰ aufweisenden Druckseitenformates F⁰ bzw. f⁰, im weiteren auch bezeichnet als Format F⁰ bzw. f⁰, entsprechen. Die Nennbreite b⁰ stell hierbei z. B. die in axialer Richtung gemessene Druckseitenbreite b_{D} (hier b_{D} = b_{D}⁰) eines in Bezug auf die Nennweite des jeweiligen Druckturms 01; 01' bezogenen Standardformates F⁰ (f⁰) dar (siehe z. B. Fig. 2, Fig. 3). Beispielsweise kommen bei der Standardproduktion lediglich Sujets S⁰_{j,i} bzw. Druckseiten D⁰ⱼ mit jeweils den selben Seitenabmessungen, also der selben Druckseitenbreite b⁰, mit in diesem Fall b_{D} = b⁰, zur Anwendung.

Unter dem Begriff der Druckseite Dⱼ (dⱼ) (mit j ∈ 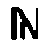 , d. h. j = 1, 2, 3, ...) soll hier derjenige Bereich verstanden sein, welcher der bedruckten Seite im späteren Produkt P⁰; p⁰; P; p entspricht, wobei die derart definierte Druckseite Dⱼ (dⱼ) z. B. auch ggf. vorliegende druckfreie Bereiche im Kopf, Fuß und/oder seitlichen Bereich der betreffenden Produktseite einschließt. Dementsprechend gilt für das Verständnis der Druckseitenbreite b⁰; b_{D,j}, z. B. Breite b⁰; b_{D,j} der Druckseite Dⱼ; D⁰ⱼ; d⁰ⱼ, nicht lediglich die Breite des tatsächlich bedruckten Bereichs, sondern die der späteren Druckseite Dⱼ (dⱼ) mit ggf. im Kopf, Fuß und/oder seitlich druckfreien Bereichen entsprechende Druckbildbreite. Die Druckseite Dⱼ (dⱼ) entspricht somit auf der Bahn 02; 02' dem durch die spätere Produktseite eingenommenen Bereich. Dies gilt gleichermaßen für die Bedeutung des Druckseitensujets Sⱼ sowie dessen Breite auf dem Druckwerkszylinder 07; 07'. Die Sujets S_{j,i} stellen für den Fall eines i-fachen Mehrfarbendruckes (mit i ∈ 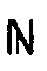 und i > 1, d. h. i = 2, 3, 4, ...) Farbauszüge 1 bis i der betreffenden Druckseiten Dⱼ (dⱼ) dar. Der Einfachheit wegen wird in den Figuren und in der weiteren Beschreibung auf die Angabe eines den Farbauszug betreffenden Index i verzichtet.

Als Sujet Sⱼ bzw. Druckseitensujet Sⱼ wird hierbei die Druckformvorlage einer einzelnen Druckseite Dⱼ bzw. einer ihrer Farbauszüge verstanden, wobei deren Breite infolge der 1 : 1 - Übertragung im wesentlichen mit derjenigen der zugeordneten Druckseite Dⱼ übereinstimmt und umgekehrt. Geringfügige Unterschiede, die ggf. infolge von z. B. Bahndehnung und/oder Feuchtigkeitsaufnahme entstehen können, sollen hier unberücksichtigt sein. Die Nennweite des Druckwerks 11; 11' bzw. Druckturms 01; 01' und Nennbreite b⁰ der möglichen Druckbildbreite stehen i. d. R. somit über die wunschgemäße Anzahl n bzw. m (n' bzw. m') von Druckseiten Dⱼ (F1₀; F1'₀) des Standardformates F⁰ in direktem Bezug zueinander. Der jeweilige im Standardbetrieb betriebene bzw. ausgerüstete Formzylinder 07; 07' trägt in axialer Richtung im Standardbetrieb nebeneinander dann z. B. wenigstens n; n', insbesondere vier oder sechs, Druckbildvorlagen bzw. Sujets Sⱼ eines Druckseitenformates F⁰ nebeneinander, welche der in axialer Richtung betrachteten Druckbildbreite des Standardformates F⁰ entsprechen. Die Anzahl n bzw. n' ist dann beispielsweise als Nennanzahl in Bezug auf die bedruckbaren Seiten in jeweiliger Nennbreite b⁰ zu verstehen. Diese können auf einer über die Länge durchgehenden oder auf mehreren nebeneinander angeordneten Druckformen 17; 18 vorgesehen sein. Hierbei können auf jeweils einer Druckform 17, z. B. Einzeldruckform 17, in axialer Richtung lediglich ein Sujet Sⱼ vorgesehen sein. Es können alternativ hierzu auch mehrere Sujets Sⱼ nebeneinander auf einer selben Mehrfachdruckform 18, z. B. zwei Sujets Sⱼ auf einer Panoramadruckform 18 (exemplarisch links in Fig. 2) oder drei oder mehr Sujets Sⱼ auf einer Superpanoramadruckform 18 oder gar sämtliche Sujets Sⱼ in Querrichtung auf einer durchgehenden Druckform 18 angeordnet sein.

Die Druckseiten Dⱼ sind in Fig. 2 gemäß einer bevorzugten Ausgestaltung in stehender Anordnung, z. B. Broadsheetanordnung, d. h. mit ihrer im späteren Produkt P⁰; P in Seitenhöhe bzw. entlang des Lesefalzes verlaufenden Kante in Bahnrichtung verlaufend auf die Bahn 02; 02' aufgebracht. Die Sujets Sⱼ sind entsprechend stehend am Formzylinder 07; 07' orientiert, so dass die im späteren Produkt P⁰; P parallel zum Lesefalz verlaufende Seite in Umfangsrichtung des Formzylinders 07; 07' verläuft. Die Druckseite Dⱼ bzw. das Sujet Sⱼ der Druckseite Dⱼ trägt die aufgedruckte Information, z. B. Bild und/oder Text, in Broadsheetanordnung derart orientiert, dass sie dem Betrachter bei aufrecht stehender Orientierung, d. h. mit einer gegenüber der Höhe kürzeren Breite, in korrekter Weise vorliegt. Zeilen von Textpassagen verlaufen hierbei auf der Druckseite Dⱼ parallel zur kürzeren Seite und auf dem am Formzylinder 07; 07' angeordneten Sujet Sⱼ in axialer Richtung bzw. senkrecht zum Falz Z; z. des Produktes P; p; P⁰; p⁰.

In einer Ausführungsvariante sind in Fig. 3 die Druckseiten dⱼ in liegender Ausführung, z. B. Tabloidanordnung, d. h. mit ihrer im späteren Produkt p⁰; p in Seitenhöhe bzw. entlang des Falzes z, z. B. Lesefalzes z verlaufenden Kante quer zur Bahnrichtung bzw. Bahnlänge verlaufend auf die Bahn 02; 02' aufgebracht. Die Sujets Sⱼ sind entsprechend stehend am Formzylinder 07; 07' orientiert, so dass die im späteren Produkt p°; p parallel zum Lesefalz z verlaufende Seite in Axialrichtung des Formzylinders 07; 07' verläuft. In Tabloidanordnung korrespondiert beispielsweise ein Sujet Sⱼ mit in Umfangsrichtung zwei hintereinander angeordneten Druckseiten dⱼ, zwischen welchen eine im weiteren Verlauf zu falzende Querfalzlinie, welche beispielsweise hier den Lesefalz z bildet, verläuft. Zeilen von Textpassagen verlaufen auf dem am Formzylinder 07; 07' angeordneten Sujet Sⱼ in Umfangsrichtung. Im fertig gestellten Produkt p⁰; p stellen sich die Tabloidseiten dem Betrachter i. d. R. in der selben Orientierung dar wie die o. g. am Formzylinder 07; 07' in Broadsheetorientierung bedruckten Seiten.

Die Druckstellen der Druckwerksgruppen 01; 01' werden durch Druckwerke 11; 11' gebildet, welche vorzugsweise als Offsetdruckwerke 11; 11' ausgebildet sind. Hiezu wirkt der Formzylinder 07; 07' jeweils mit einem Übertragungszylinder 08; 08' zusammen, durch welchen die Druckfarbe entsprechend des Druckbildes auf die Bahn 02; 02' übertragen wird. Grundsätzlich können die Druckwerke 11; 11' des Druckturms 01; 01' auch als Druckwerke 11; 11' zweier gestapelter Satellitendruckeinheiten ausgebildet sein, wobei dann z. B. jeweils vier Druckwerke 11; 11' mit einem Satellitenzylinder zusammen wirken. Vorzugsweise sind sie jedoch paarweise mit ihren Übertragungszylindern 08; 08' als Doppeldruckwerke zusammenwirkend ausgebildet, wobei mehrerer, insbesondere mindestens vier, der Doppeldruckwerke übereinander angeordnet sind.

Die auf den selben Falzaufbau 04 produzierenden Drucktürme 01; 01' können hinsichtlich ihres Druckverfahrens und/oder ihrer Betriebsweise grundsätzlich in der selben Weise, d. h. vom selben Typ, ausgebildet sein. In einer ersten Betriebsweise der Druckmaschine, z. B. in einer Standardproduktion, sind beispielsweise durch die auf den selben Falzaufbau 04 produzierenden Drucktürme 01; 01' Bahnen 02 eines selben ersten Papiertyps, z. B. aus einem Zeitungspapier, geführt. Dieses Papier des ersten Papiertyps zeichnet sich beispielsweise dadurch aus, dass es durch ungestrichenes (oder allenfalls geringfügig gestrichenes, z. B. Strichgewicht höchstens 5 g/m²) Papier, maschinenglatt oder durch Kalandern satiniert, gebildet ist. Sie weist i. d. R. eine offenporige Oberflächenstruktur auf, in welche die aufgebrachte Druckfarbe "wegschlägt". Die Bahn 02 des ersten Papiertyps bedarf auf ihrem Bahnweg zwischen Druckturm 01 und Falzaufbau 04 keiner zusätzlichen Trocknung durch ein entsprechendes, aktiviertes Aggregat. Die auf den Falzaufbau 04 auflaufende bedruckte Bahn 02 kann somit auch als Coldsetbahn 02 bezeichnet sein. Eine Coldsetbahn 02 wird vom Rollenwechsler 03 abgewickelt, durch den Druckturm 01 bedruckt, und ohne Trockner oder zumindest ohne einen aktivierten Trockner auf den Falzaufbau 04 geführt. Unter einem im Coldset betriebenen Druckturm 01 ist ein Druckturm zu verstehen, durch welchen eine Bahn 02 eines ersten Papiertyps geführt ist und/oder durch welchen eine Bahn 02 ohne anschließendes Trocknen zum Falzaufbau 04 geführt wird.

Es kann jedoch ein Trockner 09 und ein Bahnweg vom Druckturm 01 zum Falzaufbau 04 durch den aktiven Trockner 09, z. B. einen UV- oder insbesondere einen thermischen Trockner (z. B. Heißluft- oder IR-Strahlungstrockner), vorgesehen sein, sodass in einer alternativen Betriebsweise eine in anderer Betriebsart bedruckte und/oder durch Papier eines anderen Typs ausgebildete Bahn 02 geführt ist. Die Bahn 02 kann hierbei aus einem vom ersten Typ verschiedenen Papiertyp ausgebildet sein, z. B. sich in seinem Flächengewicht und/oder Strichgewicht und/oder seiner Oberflächenbeschaffenheit und/oder in der Farbe des unbedruckten Zustandes unterscheiden. Z. B. kann sie ein um mindestens 10 g/m² höheres Flächengewicht und/oder ein um mindestens 5 g/m² höheres Strichgewicht und/oder eine um mindestens 10 % abweichende, z. B. kleinere, Rauhigkeit nach Bendtsen (ISO 8791/2) und/oder einen sich um mindestens 15° unterscheidenden, z. B. kleineren, Weißgrad, d. h. eine andere Färbung, als der erste Papiertyp aufweisen. Dies zusammenfassend ist die Bahn 02 anderen Typs aus einem gegenüber dem ersten Typ höherwertigeren und/oder andersfarbigen Papier ausgebildet.

Es können zwei Drucktürme 01; 01' in einer Produktionsart im Coldset (s.o.) betrieben sein. Vorzugsweise ist wenigstens ein Druckturm 01; 01' im beschriebenen Heatset betreibbar. In einer Gemischtproduktion ist beispielsweise ein Druckturm 01 mit zugehöriger Bahn 02 im Coldset und ein Druckturm 01' mit zugehöriger Bahn 02' und Trockner 09' im Heatset betreibbar bzw. betrieben, wobei beide Bahnen 02; 02' dann zur gemeinsamen Verarbeitung dem selben Falzaufbau 04 zugeführt werden bzw. sind.

Vorteilhafter Weise sind die Druckwerke 11; 11' eines ersten und zweiten Druckturms 01; 01' zum Druck mit einer selben Nennweite b_{N}, d. h. einer selben für den Druck wirksamen Breite, ausgeführt.

Die Formzylinder 07; 07' des mindestens einen Druckturms 01; 01, ggf. sämtlicher Drucktürme 01; 01', weisen zum Zwecke einer variablen Druckbildbreite z. B. vorteilhafter Weise am Umfang mindestens eine über die nutzbare Ballenlänge durchgehende Befestigungsöffnung zur Aufnahme einer durchgehenden oder zumindest zweier halbbreiter Druckformen 18 auf. Bei vorteilhafter Verwendung einer über die volle (n'*b₀) oder halbe (n'*b₀/2) Länge durchgehender Druckform 18 kann diese mit Druckbildern variabler Breite bestückt bzw. bebildet sein. Im Fall einseitenbreiter Druckformen 17 nebeneinander können diese ggf. wahlweise schmaler oder breiter ausgebildet werden.

In der Druckmaschine ist somit mindestens eine erste Bahn 02 in mindestens einem ersten Druckturm 01 beidseitig bedruckbar und diese Bahn 02 oder aus dieser Bahn 02 durch Längsschnitt erzeugte teilbreite Bahnen 02.x; 02'.y, kurz Teilbahnen 02.x; 02'.y (mit x, y = 1, 2, 3, ...) nach dem Bedrucken und ggf. einem Längsschnitt, entlang eines Bahnweges über entsprechend vorgesehene Bahnleitmittel 24; 28; 29, z. B. exemplarisch in Fig. 1 im Bahnweg der noch ungeschnittenen Ursprungsbahn 02; 02' vorgesehene Leit- und/oder Zugwalzen 29 und/oder mit Teilbahnen 02.x; 02'.y zusammen wirkende Wendestangen 24 und/oder Leitwalzen 28 der dem Trichtereinlauf vorgeordneten Walzengruppe 12, dem Falzaufbau 04 zuführbar.

Vorzugsweise sind eine erste Bahn 02 in mindestens einem ersten Druckturm 01 und mindestens eine zweite Bahn 02' in mindestens einem zweiten Druckturm 01' jeweils beidseitig und insbesondere mehrfarbig bedruckbar und diese Bahnen 02; 02' (bzw. aus diesen Bahnen 02; 02' durch Längsschnitt erzeugte teilbreite Bahnen 02.x; 02'.y mit x, y = 1, 2, 3, ...) nach dem Bedrucken und ggf. Längsschnitt gleichzeitig über entsprechend vorgesehene Bahnleitmittel 28, z. B. Leitwalzen 28 einer Walzengruppe 12, dem selben Falzaufbau 04 zuführbar.

Dar Falzaufbau 04 weist eine Trichterebene 19 mit mindestens einem Falztrichter 13 auf. Vorzugsweise sind mehrere, z. B. mindestens zwei Falztrichter 13 in einer selben Maschinenebene quer zur Bahnlängsrichtung nebeneinander angeordnet, wobei die Anzahl der nebeneinander angeordneten Falztrichter 13 bei im Bahnweg vorgeordneten m-fachbreitem Druckturm 01; 01' vorteilhaft der Anzahl m (z. B. m = 1, 2, 3, vorzugsweise 2 oder 3) entspricht. Dem Falztrichter 13 ist bzw. den Falztrichtern 13 sind in üblicher Weise über mindestens ein Bahnleitmittel 14, z. B. eine Walze 14, insbesondere eine Zugwalze 14, Bahnen 02; 02' oder hieraus durch Längsschnitt gewonnene Teilbahnen 02.x; 02'.y zuführbar.

In Standardproduktion weist die Bahn 02; 02' vor dem Längsschnitt eine Mehrzahl k Druckbilder von Druckseiten Dⱼ, dⱼ gleicher Breite b_{D,j} = b⁰_{D} nebeneinander auf (mit k ∈ 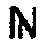 und k > 1, d. h. k = 2, 3, 4, 5, 6, ..., insbesondere k ≥ 3, vorzugsweise k = 4 oder 6). Die Bahnen 02; 02' bzw. Teilbahnen 02.x; 02'.y werden in Standardproduktion in üblicher Weise dem Falztrichter 13 entlang einer Transportrichtung T1 zugeführt. Je nach zu erzeugendem Produkt P; p; P⁰; p⁰ können dem jeweiligen Falztrichter 13 (z. B. in Broadsheetproduktion) trichtermittig zweiseitenbreite Teilbahnen 02.x; 02'.y zugeführt werden, welche dann über dem Falztrichter 13 zu einem längsgefalzten Strang 16 längsgefalzt werden, oder es werden z. B. in einer Tabloidproduktion dem Falztrichter 13 zuvor trichtermittig längsgeschnittene z. B. einseitenbreite Teilbahnen 02.x; 02'.y zugeführt, welche dann über dem Falztrichter 13 aufeinandergelegt werden.

Für den bevorzugten Fall mehrfachbreiter (m > 1) Drucktürme 01 bzw. Ursprungsbahnen 02 sind auf dem Bahnweg zwischen Druckturm 01 und Falzaufbau 04 wenigstens m-1 axial voneinander beabstandete Längsschneidmesser 22 einer Längsschneideinrichtung 21 vorgesehen, durch welche die Ursprungsbahn 02 z. B. in einer zwischen den jeweils benachbarten Falztrichtern 13 liegenden Flucht, längs teilbar ist.

In einer Ausführung der Druckmaschine für eine Standardtabloidproduktion über den Falztrichter 13 kann (z. B. je Falztrichter 13) eine nicht dargestellte Längsschneideinrichtung entweder direkt vor dem Falztrichter 13 oder jeweils im stromaufwärtigen Bahnweg der auf den Falztrichter 13 zu führenden Bahn 02 bzw. Teilbahn 02.x vorgesehen sein, welche die Bahn 02 bzw. Teilbahn 02.x trichtermittig längs schneidet. Diese trichtermittige Längsschneideinrichtungen und die zuvor genannte Längsschneideinrichtung 21 für die Hauptschnittlinien können dann baulich auch zusammengefasst sein. Vorzugsweise ist zumindest eine Längsschneideinrichtung 21 im Bahnweg stromaufwärts einer im Folgenden beschriebenen Wendevorrichtung 23 vorgesehen, wobei dennoch - für den reinen Geradeausbetrieb - zusätzlich eine derartige Längsschneideinrichtung im Bereich des Trichterauflaufs vorgesehen sein kann. Für die Ausführung und/oder den Betrieb der Falztrichter 13 in reiner Broadsheetproduktion oder die unten näher beschriebene Sonderproduktion in Tabloidanordnung (bezogen auf die Seitenausrichtung auf der Bahn 02; 02' bzw. die Sujetausbildung am Formzylinder 07; 07') können die für den Trichtermittelschnitt vorsehbaren Längsschneideinrichtungen entfallen oder abgestellt sein.

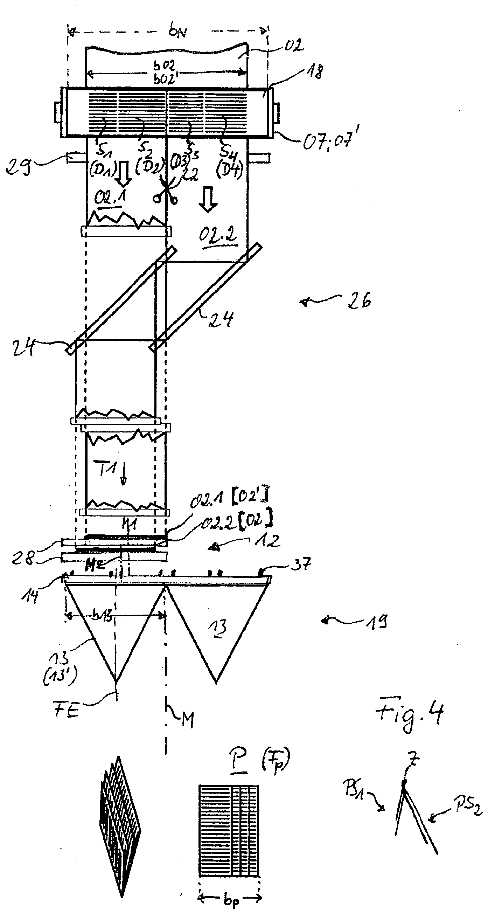

Für den Fall mehrfachbreiter Drucktürme 01 bzw. Ursprungsbahnen 02 ist im Bahnweg der jeweiligen Bahn 02 vor dem Falzaufbau 04 eine schematisch in Fig. 1 dargestellte Wendevorrichtung 23 mit wenigstens einer Wendeeinrichtung 26; 27, z. B. ein mehrere jeweils ein Paar von Wendestangen 24 aufweisende Wendeeinrichtungen 26; 27, z. B. Wendedecks 26; 27, umfassender Wendeturm 23, vorgesehen. Durch eine Wendeeinrichtung 26; 27 ist eine Teilbahn 02.x; 02'.y der Ursprungsbahn 02; 02' in eine andere Trichterflucht, z. B. in die Flucht einer anderen Teilbahn 02.x; 02'.y, versetzbar (siehe z. B. Beispiele der Fig. 4 und folgende).

Vorzugsweise sind für den Fall einer Anzahl I (I ∈ 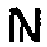 ) m-fachbreit ausgebildeter Druckstellengruppen 01; 01' bzw. Drucktürmen 01; 01' zumindest eine Anzahl von I * (m - 1), für die anschließend beschriebene Sonderproduktionsart vorzugsweise eine Anzahl von I * m - 1 Wendeeinrichtungen 26; 27 vorgesehen.

Z. B. je Wendeeinrichtung 26; 27 schließt sich beispielsweise auf dem Bahnweg eine Längsregistereinrichtung 31 an, durch welche die Länge der Laufwege der Teilbahnen 02.x; 02'.y zueinander veränderbar sind. Die Längsregistereinrichtung 31 bildet im Bahnweg z. B. eine S-förmige Schlaufe aus, wobei in einer der beiden Wendeschlaufen als Bahnleitmittel 32 eine ortsfest angeordnete Walze 32, und in der anderen Wendeschlaufe eine in Bahnlaufrichtung verstellbare Walze 33, z. B. Registerwalze 33, als Bahnleitmittel 33 vorgesehen ist. Vorzugsweise sind für den Fall einer Anzahl I m-fachbreit ausgebildeter Drucktürmen 01; 01' zumindest eine Anzahl von I * (m - 1), für die anschließend beschriebene Sonderproduktionsart vorzugsweise eine Anzahl von I * m - 1 Längsregistereinrichtungen 31 vorgesehen.

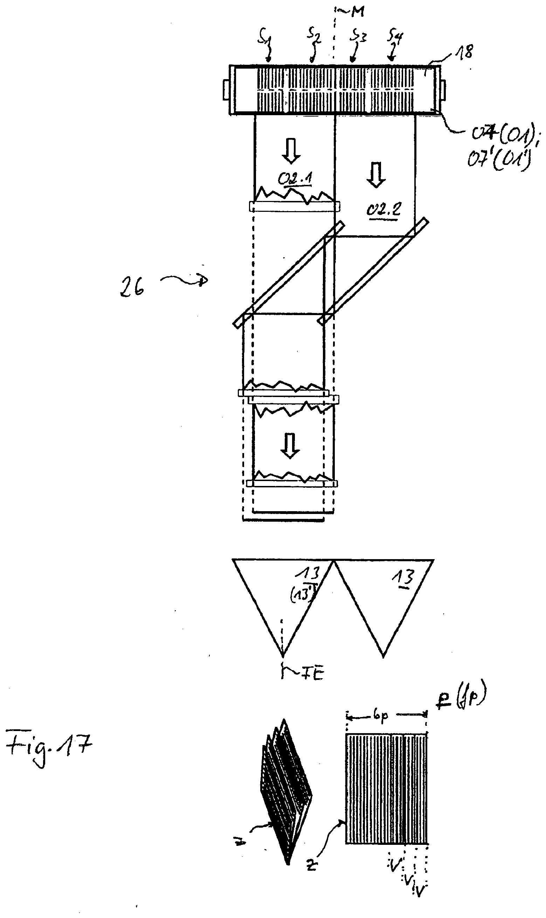

Mit der genannten Anordnung sind nun in Standardproduktion in bekannter Weise aus Bahnen 02; 02' bzw. Teilbahnen 02.x; 02'.y eine z. B. der Trichterzahl entsprechende Anzahl von Strängen 16 herstellbar und durch den nachgeordneten Falzapparat 06 ggf. inline weiterverarbeitbar. Im Fall eines Zeitungs- und/oder Broadsheetproduktes P⁰ wird der Strang 16 bzw. werden zusammengefasste Stränge 16 in Produktabschnitte quer geschnitten, welche - ggf. gesammelt - mit ihrem durch den Längsfalz gebildeten Rücken- oder Lesefalz Z bereits dem Zeitungsprodukt P⁰ im Zeitungsformat entsprechen. Dies gilt entsprechend auch für nachfolgend beschriebene Sonderprodukte P in Broadsheetanordnung. Üblicher Weise wird dieses Zeitungsprodukt P⁰ (P) zur besseren Handhabung im Falzapparat 06 noch mit einem Querfalz versehen. Im Folgenden sind die als Zeitungs- und/oder Broadsheetprodukte P⁰; P ausgebildeten Produkte P⁰; P (siehe z. B. Fig. 4, 9, 14 für Sonderprodukte P) ohne den zusätzlichen Querfalz, die in Tabloidanordnung hergestellten Produkte p⁰; p, z. B. ebenfalls Zeitungsprodukte p⁰; p (siehe z. B. Fig. 17 für Sonderprodukte p) ohne einen ggf. zu bildenden zusätzlichen Querfalz als Lesefalz dargestellt.

Die Druckmaschine ist nun derart ausgeführt und/oder in zumindest einer Produktionsart, z. B. in einer Sonderproduktion, betrieben oder betreibbar, um hierdurch - z. B. wahlweise zum Standardprodukt P⁰; p⁰ - ein im Folgenden dargelegtes Druckprodukt P; p, kurz Produkt P; p, z. B. Sonderprodukt P; p herzustellen.

Zur Herstellung des Druckproduktes P; p wird zunächst eine erste und eine zweite, als Vollbahn 02; 02' oder als Teilbahn 02.x; 02'.y einer breiteren Ursprungsbahn 02; 02' ausgebildete Bahn 02; 02'; 02.x; 02'.y in der Weise hergestellt, dass sie durch selbe oder durch voneinander verschiedene Druckwerke 11; 11' jeweils auf zumindest einer ihrer Seiten bedruckt werden, sodass sie jeweils die Druckbilder zweier Druckseiten Dⱼ; dⱼ nebeneinander tragen. Als Vollbahn 02; 02' ist hier eine ungeschnittene Bahn 02; 02' zu verstehen, welche nicht zwingend die maximal mögliche Breite, z. B. Nennweite b_{N}, aufweisen muss, sondern als teilbreite Bahn 02; 02' mit gegenüber der Nennweite b_{N} schmalere Breite b02; b02' aufweisen kann. Stammen die beiden Bahnen 02.x; 02'.y aus einem selben Druckwerk 11; 11' so werden diese auf Bahnstreifen der Vollbahn 02; 02' mit je zwei Druckseiten Dⱼ bedruckt, die den auf den Falztrichter 13; 13' zu führenden stromabwärtigen Teilbahnen 02.x; 02'.y entsprechen. Insbesondere werden die beiden Bahnen 02; 02'; 02.x; 02'.y (bzw. die entsprechenden Bahnstreifen, was im Weiteren nicht jeweils eigens hervorgehoben wird) auf beiden Seiten in dieser Weise bedruckt, wobei sich die Druckbilder der Druckseiten Dⱼ, dⱼ beider Bahnseiten paarweise jeweils decken, d. h. paarweise die selben Abmessungen aufweisen und an der selben Stelle der Bahn 02; 02'; 02.x; 02'.y beidseitig aufgebracht werden bzw. sind. Diese mindestens zwei derart bedruckten Bahnen 02; 02'; 02.x; 02'.y werden stromabwärts zur Bildung eines Stranges 16, d. h. gemeinsam bzw. zusammen, auf einen selben Falztrichter 13 geführt, wobei jedoch die erste und die zweite Bahn 02; 02'; 02.x; 02'.y mit ihren Bahnmitten M1; M2 (M3; M4) seitlich versetzt zueinander auf den Falztrichter 13 geführt werden. Vorzugsweise werden sie hierbei beide mit ihren Bahnmitten M1; M2 (M3; M4) jeweils seitlich versetzt, insbesondere zu einer selben Seite seitlich versetzt, zu einer den Längsfalz bildenden Falzebene FE des Falztrichters 13 auf diesen geführt. Es können auch mehr als zwei in o. g. Weise hergestellte Bahnen 02; 02'; 02.x; 02'.y sämtlich oder teilweise zueinander versetzt auf den Falztrichter 13 geführt sein bzw. werden (s.u.). Vorzugsweise sind sämtliche, mehrere oder zumindest eine der übereinander auf den Falztrichter 13 geführten Bahnen 02; 02'; 02.x; 02'.y ohne Trichtermittelschnitt auf diesen geführt und erhalten einen Falz Z; z.

Durch den Falztrichter 13 wird nun ein Strang 16 (bzw. nach dem Querschneiden ein Produkt P; p) geformt, in dem die mindestens zwei versetzten Bahnen 02; 02'; 02.x; 02'.y im Strang 16 bzw. im Produkt P; p zwei gefalzte, insbesondere doppelseitige Bogen B1; B2 (B3; B4) bilden, von welchen einer der Bogen B1; B2 (B3; B4) im Strang 16 bzw. Produkt P; p im anderen zu liegen kommt, und welche zusammen im Strang 16 bzw. Produkt P; p vier Lagen L1; L2; L3; L4 (L5; L6; L7; L8) bilden. Die beiden Bogen B1; B2 (B3; B4) liegen infolge des Versatzes der auflaufenden Bahnen 02; 02'; 02.x; 02'.y jedoch auf zumindest einer ihrer Längsseiten, insbesondere auf der dem durch den Falztrichter 13 gebildeten Falz Z, z. B. im Broadsheet dem Rückenfalz Z, gegenüberliegenden Längsseite, nicht deckungsgleich aufeinander, sondern bilden auf zumindest dieser Längsseite einen Versatz V aus. Dieser im Produkt P; p dann insbesondere mehrfach vorliegende Versatz V zwischen benachbarten Lagen L1; L2; L3; L4; L5; L6; L7; L8 bzw. zwischen unten genannten mehrlagigen Produktabschnitte pₐ; p_{b}; p_{c}; p_{d} kann in Art eines Registers dem Benutzer ein gezieltes Eingreifen und Öffnen des Produktes P; p erleichtern. Der (jeweilige) Versatz V beträgt z. B. mindestens 5 mm, vorzugsweise z. B. mindestens 10 mm, insbesondere 15 bis 35 mm.

Die versetzten Lagen L1; L2; L3; L4; L5; L6; L7; L8 bzw. versetzten mehrlagigen Produktabschnitte pₐ; p_{b}; p_{c}; p_{d} sind im Produkt P; p vorzugsweise derart mit ihrem Versatz V angeordnet, so dass die Seitenbreite im über den Falztrichter 13 gebildeten Produkt P; p von vorne nach hinten mit jedem Versatz V - z. B. fächerartig - stets ab- oder zunimmt, insbesondere zunimmt. Im über den Falztrichter 13 gebildeten Produkt P; p liegt von Produktabschnitt pₐ; p_{b}; p_{c}; p_{d} zu Produktabschnitt pₐ; p_{b}; p_{c}; p_{d} eine homogene Veränderung, z. B. eine homogene Abnahme oder vorzugsweise eine homogene Zunahme, in der Seitenbreite vor. Für den Fall, dass dieses über den Falztrichter 13 gebildete Produkt P; p als Teilprodukt P; p oder als sog. Sektion P; p im Falzapparat 06 oder einer Weiterverarbeitungsstufe mit einem anderen Teilprodukt P; p bzw. einer anderen Sektion P; p zusammengefasst wird, gilt das Genannte zumindest für das als Teilprodukt P; p über den Falztrichter 13 gebildete Produkt P; p.

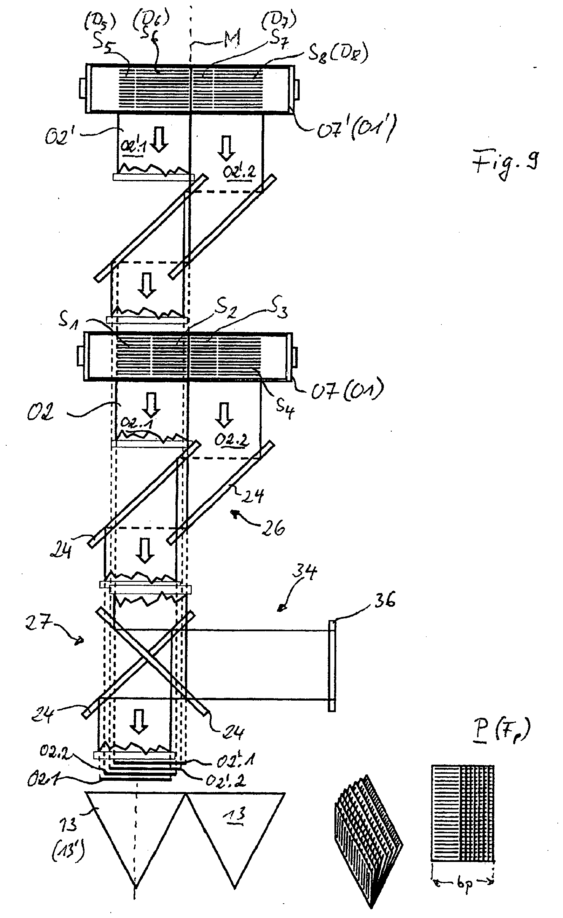

Vorzugsweise werden die beiden Bahnen 02; 02'; 02.x; 02'.y derart auf den Falztrichter 13 geführt, sodass die mit ihrer Bahnmitte M1 weiter von der Falzebene FE beabstandete Bahn 02; 02'; 02.x; 02'.y, z. B. die Teilbahn 02.1, oberhalb der mit ihrer Bahnmitte M2 weniger weit von der Falzebene FE beabstandeten Bahn 02; 02'; 02.x; 02'.y, z. B. der Teilbahn 02.2, auf dem Falztrichter 13 zu liegen kommt. D. h. umgekehrt, dass die mit ihrer Bahnmitte M2 weniger weit von der Falzebene FE beabstandete Bahn 02; 02'; 02.x; 02'.y, z. B. der Teilbahn 02.2, im über den Falztrichter 13 geführten mehrlagigen Bündel weiter innen bzw. näher zur Trichterfläche liegt als die mit ihrer Bahnmitte M1 weiter von der Falzebene FE beabstandete Bahn 02; 02'; 02.x; 02'.y, z. B. die Teilbahn 02.1. Das selbe gilt vorzugsweise in gleicher Weise für mehr als zwei, z. B. drei, vier (siehe z. B. Fig. 9), fünf oder gar sechs zueinander versetzt auf den selben Falztrichter 13 geführte Bahn 02; 02'; 02.x; 02'.y im Verhältnis jeweils zweier dieser aufeinander folgender versetzter Bahnen 02; 02'; 02.x; 02'.y, wodurch bezogen auf die versetzten Bahnen 02; 02'; 02.x; 02'.y im auf den Falztrichter 13 auflaufenden Bündel vorzugsweise eine treppenförmige Anordnung ausgebildet wird bzw. ist.

Die Beispiele der Fig. 4, Fig. 9 und Fig. 14 sind der Übersichtlichkeit wegen in einer Ausführung mit jeweils lediglich einer versetzten Bahn 02; 02'; 02.x; 02'.y je Versatzstufe dargelegt. Durch die Versatzstufen können dann jeweils durch je eine Lage L1; L2; L3; L4; L5; L6; L7; L8 einlagige Produktabschnitte pₐ; p_{b}; p_{c}; p_{d} (Bezeichnung hier ohne Unterscheidung zwischen Broadsheet und Tabloid) gebildet sein, welche beispielsweise inhaltlich voneinander verschiede Informationen betreffen und durch die registerartige Anordnung schnell auffindbar sind.

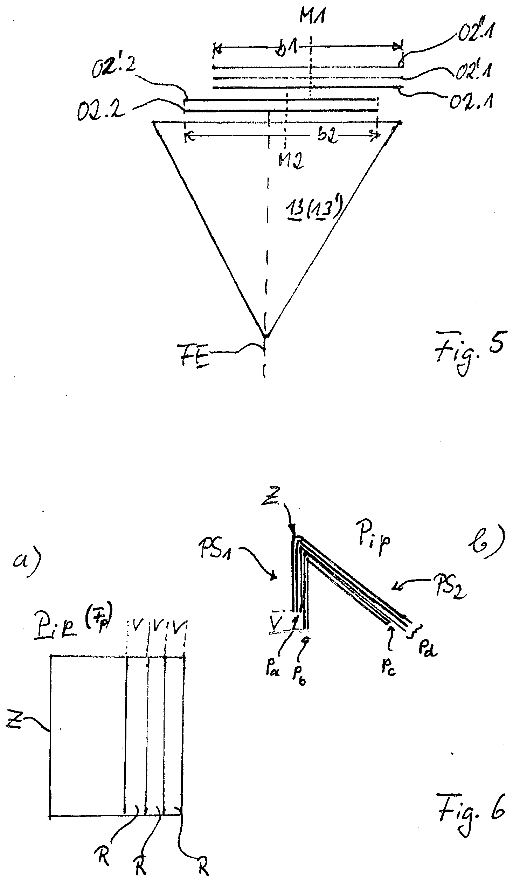

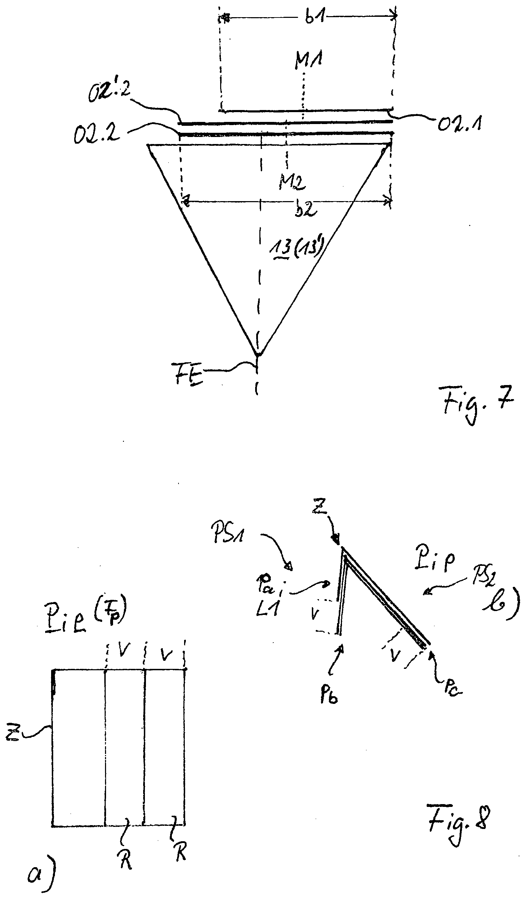

Es können jedoch - wie z. B. schematisch und exemplarisch in Fig. 5 und Fig. 7 dargestellt - in einer oder in mehreren der Versatzstufen auch mehrere um das selbe Maß zur Bahn 02; 02'; 02.x; 02'.y der benachbarten Stufe und/oder zur Falzebene FE versetzt angeordnete Bahnen 02; 02'; 02.x; 02'.y, im Folgenden auch als Gruppe von Bahnen 02; 02'; 02.x; 02'.y bezeichnet, vorgesehen sein. Diese um das selbe Maß versetzten Bahnen 02; 02'; 02.x; 02'.y, z. B. eine Teilbahn 02".1 einer weiteren Bahn, sind bevorzugt beim Auflaufen auf den Falztrichter 13 vertikal benachbart zueinander angeordnet und bilden im Produkt P; p dann nach dem Längsfalzen je nach Anordnung der übrigen Bahnen 02; 02'; 02.x; 02'.y einen oder zwei mehrlagige Produktabschnitte pₐ; p_{b} p_{c}; p_{d}. Im gefalzten Strang 16 bzw. quer geschnittenen Produkt P; p sind auf diese Weise ein oder mehrere mehrlagige Produktabschnitte pₐ; p_{b}; p_{c}; p_{d} ausgebildet bzw. ausbildbar (siehe z. B. zu Fig. 5 und Fig. 7 korrespondierend Fig. 6 und Fig. 8), welche zumindest auf einer Längsseite, insbesondere auf der Längsseite, die dem durch den Falztrichter 13 gebildeten Falz, z. B. Rückenfalz Z, gegenüberliegt, zu einem benachbarten ein- oder mehrlagigen Produktabschnitt pₐ; p_{b}; p_{c}; p_{d} um einen Versatz V versetzt sind. In der Weise können ein oder mehrere z. B. inhaltlich jeweils zusammengehörige Produktabschnitte pₐ; p_{b}; p_{c}; p_{d} gebildet werden bzw. sein, welche durch den Versatz V der Seitenkanten in der Art eines Registers durch den Benutzer schnell aufzufinden sind.

In vorteilhafter Ausführung bzw. Anordnung (siehe z. B. Fig. 4, Fig. 5 und Fig. 9) sind die bzgl. ihrer Bahnmitte M1; M2 (M3; M4) zueinander versetzten Bahnen 02; 02'; 02.x; 02'.y zueinander an beiden Bahnrändern zur selben Seite hin versetzt und vorzugsweise mit einer selben Breite b1; b2 (b3; b4) ausgebildet. Durch geeignete Wahl der Abstände zwischen den Bahnmitten M1; M2 und der Falzebene FE können hierdurch mit einer Anzahl, z. B. zwei, versetzter Bahnen 02; 02'; 02.x; 02'.y (bzw. Gruppen von Bahnen 02; 02'; 02.x; 02'.y) im Strang 16 bzw. dem Produkt P; p die doppelte Anzahl, z. B. vier, stufenförmig versetzte Lagen L1; L2; L3; L4 (L5; L6; L7; L8) gebildet werden, welche jeweils als einzelne Lage L1; L2; L3; L4 (L5; L6; L7; L8) einlagig oder im Falle einer oder mehrerer Gruppen entsprechend oben Genanntem als mehrlagige Produktabschnitte pₐ; p_{b}; p_{c}; p_{d} (z. B. Fig. 5 und Fig. 6) ausgebildet sein können.

In einer Variante (siehe z. B. Fig. 7 und 8) können eine, mehrere oder alle bzgl. ihrer Bahnmitte M1; M2; M3; M4 zueinander versetzte Bahnen 02; 02'; 02.x; 02'.y bzw. die Gruppen von Bahnen 02; 02'; 02.x; 02'.y, insbesondere benachbarte versetzte Bahnen 02; 02'; 02.x; 02'.y bzw. die Gruppen von Bahnen 02; 02'; 02.x; 02'.y, beim Auflaufen auf den Falztrichter 13 im Bereich einer selben ihrer Längskanten, insbesondere im Bereich ihrer von der Falzebene FE ferneren Bahnkante, deckungsgleich aufeinander geführt sein bzw. werden. In diesem Fall bilden diese zwar bzgl. der Bahnmitten M1; M2; M3; M4 zueinander versetzt, jedoch im Bereich einer Bahnkante deckungsgleich angeordneten Bahnen 02; 02'; 02.x; 02'.y bzw. Gruppen von Bahnen 02; 02'; 02.x; 02'.y nach dem Falzen im Strang 16 bzw. im Produkt P; p im Bereich eines Produktschenkels PS₁; PS₂ (z. B. dem hinteren Produktschenkel PS₂) einen gemeinsamen Produktabschnitt pₐ; p_{b}; p_{c}; p_{d} aus, während sie im anderen, insbesondere vorderen Produktschenkel PS₁ einzelne Lagen L1; L2; L3; L4 (L5; L6; L7; L8) bzw. Produktabschnitte pₐ; p_{b}; p_{c}; p_{d} bilden.

In den genannten Beispielen können die Bahnen 02; 02'; 02.x; 02'.y bzw. Gruppen von Bahnen 02; 02'; 02.x; 02'.y mit ihren Bahnmitten M1; M2; M3; M4 und/oder mit einer oder beiden Seitenkanten vorzugsweise in der Weise, z. B. von Stufe zu Stufe um einen selben Betrag, zueinander versetzt sein, dass zwischen den Stufen im Strangeinlauf und/oder im gefalzten Strang 16 oder quer geschnittenen Produkt P; p zwischen jeweils den versetzten Seitenkanten der benachbarten Produktabschnitte pₐ; p_{b}; p_{c}; p_{d} ein Versatz V der selben Größe vorliegt.

In einer Variante können die Bahnen 02; 02'; 02.x; 02'.y bzw. Gruppen von Bahnen 02; 02'; 02.x; 02'.y mit ihren Bahnmitten M1; M2; M3; M4 und/oder mit einer oder beiden Seitenkanten jedoch auch in der Weise, z. B. von Stufe zu Stufe um einen variierenden Betrag, zueinander versetzt sein, dass zwischen den Stufen im Strangeinlauf und/oder im gefalzten Strang 16 oder quer geschnittenen Produkt P; p zwischen versetzten Seitenkanten benachbarter Produktabschnitte pₐ; p_{b}; p_{c}; p_{d} zumindest zwei voneinander verschiedene Größen für den Versatz V, z. B. zwischen je zwei benachbarten Produktabschnitten pₐ; p_{b}; p_{c}; p_{d} ein anderer Versatz ( z. B. V1; V2; V3, ...), vorliegt.

In sämtlichen Ausführungen des Produktes P; p bzw. dessen Herstellung ist vorzugsweise durch den Versatz V der Seitenkanten jeweils zweier benachbarter ein- oder mehrlagiger Produktabschnitte pₐ; p_{b}; p_{c}; p_{d} des Produktes P; p auf dem von der Rück- oder Vorderseite, vorzugsweise von der Vorderseite des Produktes P; p her betrachtet zweiten bis letzten Produktabschnitt pₐ; p_{b}; p_{c}; p_{d} - z. B. fächerartig - ein im geschlossenen Zustand des Produktes P; p freier bzw. sichtbarer, insbesondere nicht durch den vorangehenden Produktabschnitt pₐ; p_{b}; p_{c}; p_{d} überdeckter, seitlicher Druckseitenbereich R gegeben. Bei einem ggf. variierenden Versatz V (s. o.) variiert hierzu korreliert auch die Breite des freien, d. h. sichtbaren Druckseitenbereichs R (z. B. R1; R2; R3, ...). Unter dem geschlossenen Produkt P; p ist beispielsweise das am Falz Z noch ungeöffnete längsgefalzte Produkt P; p zu verstehen, welches beispielsweise keiner weiteren, ggf. vorgesehenen Faltung wie beispielsweise einem zusätzlichen Querfalz, unterliegt.

Der freie bzw. sichtbare Druckseitenbereich R der betreffenden Druckseite Dⱼ bzw. der entsprechenden Produktseite Pₚ (mit p ∈ 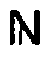 ) kann grundsätzlich unbedruckt sein oder aber das übrige, überdeckte Druckbild fortsetzend und/oder mit einer z. B. vom überdeckten Druckbild verschiedenen, jedoch inhaltlich mit diesem in Verbindung stehenden Registerinformation bedruckt sein. Ungeachtet dessen, ob dieser Druckseitenbereich bedruckt oder nicht bedruckt ist, ist dieser als Bestandteil der Druckseite Dⱼ und ihrer Breite bzw. Länge im oben genannten Sinne zu verstehen, was auch entsprechend für das zugehörige Sujet Sⱼ gilt.

Wie bereits dargelegt, werden zur Herstellung eines oben genannten Produkte P; p eine erste, als Vollbahn 02; 02' oder als Teilbahn 02.x; 02'.y einer breiteren Ursprungsbahn 02; 02' ausgebildete Bahn 02; 02'; 02.x; 02'.y und eine zweite, als Vollbahn 02; 02' oder als Teilbahn 02.x; 02'.y einer breiteren Ursprungsbahn 02; 02' ausgebildete Bahn 02; 02'; 02.x; 02'.y in selben oder verschiedenen Druckwerken 11; 11' jeweils beidseitig nebeneinander mit Druckbildern zweier Druckseiten Dⱼ; dⱼ bedruckt, bevor sie zueinander und/oder zur Falzebene FE seitlich versetzt auf den Falztrichter 13 geführt werden.

In einer ersten, nicht explizit dargestellten Ausführung sind die beiden Bahnen 02; 02' beispielsweise als Vollbahnen 02; 02' mit jeweils einer Breite b02; b02' ausgebildet, die den jeweils nebeneinander aufzudruckenden Druckbildern Dⱼ entspricht. Die Bahnen 02; 02' können hierbei z. B. einfachbreit ausgebildete Druckwerke 11; 11', insbesondere zwei einfachbreit ausgebildete Drucktürme 01; 01' bzw. Druckstellengruppen 01; 01', durchlaufen oder aber als lediglich teilbreite Vollbahnen 02; 02' breitere Druckwerke 11; 11', z. B. doppelt- oder dreifachbreit ausgebildete Druckwerke 11; 11' bzw. zwei derartig ausgeführte Drucktürme 01; 01' durchlaufen. Diese Ausführung entspräche z. B. im wesentlichen der in Fig. 9 in der Flucht des linken Falztrichters 13 dargestellten Situation, wobei jedoch lediglich die dort mit 02.1' bzw. 02.1 gekennzeichneten Teilbahnen 02.1; 02.1' als die beiden Druckbilder nebeneinander aufweisenden Vollbahnen zu berücksichtigen wären. Die Formzylinder 07; 07' der Druckstellengruppen 01; 01' können wie in Fig. 9 mehrfachbreit, z. B. doppeltbreit, oder aber entgegen der Darstellung in Fig. 9 lediglich einfachbreit ausgebildet sein. Die beiden Bahnen 02; 02' können, sofern deren Breite b02; b02' schmaler ist als die Nennweite b_{N}, zueinander um den gewünschten Versatz V zueinander versetzt durch die Druckstellengruppen 01; 01' geführt sein. Alternativ hierzu kann Im Bahnweg wenigstens einer der beiden Bahnen 02; 02' eine Wendeeinrichtung 27 mit zugeordneter Bay-Window-Führung 34 vorgesehen, durch welche eine Bahn 02; 02' auch um einen lediglich geringen Betrag, z. B. auch um weniger als 300 mm, seitlich versetzbar ist. Der Bay-Window-Führung 34 ist wenigstens ein Bahnleitelement 36, z. B. eine z. B. mit ihrer Rotationsachse senkrecht zu Rotationsachsen der Formzylinder 07; 07' verlaufende Walze 36, zugeordnet, über welches bzw. welche die zu versetzende Bahn 02; 02' nach Durchlaufen der eingangsseitigen Wendestange 24 geführt wird bevor sie die ausgangsseitige Wendestange 24 umschlingt Die Wendestangen 24 der Wendeeinrichtung 27 sind hierbei gekreuzt angeordnet.

Auf den beiden Formzylindern 07; 07' sind hierbei jeweils zwei Sujets S₁; S₂; S₃; S₄ von Druckseiten D₁; D₂; D₃; D₄ mit in Axialrichtung voneinander verschiedener Breite bₛᵤ u = 1, 2, 3, ..., z. B Sujetbreite b_{Su} nebeneinander benachbart angeordnet. Vorzugsweise sind die vier Sujets S₁; S₂; S₃; S₄ der auf die jeweils vergleichbare Bahnseite der beiden Bahnen 02; 02' paarweise nebeneinander zu druckender Druckseiten D₁; D₂; D₃; D₄ sämtlich mit voneinander verschiedenen Breiten b_{S1}; b_{S2}; b_{S3}; b_{S4} ausgebildet.

Die Anzahl der versetzt auf den Falztrichter 13 geführter Bahnen 02; 02' oder auch Gruppen von Bahnen 02; 02' in o. g. Weise kann in dieser Ausführung dadurch erhöht werden, dass mehr als zwei Bahnen 02; 02' in mehr als zwei Druckstellengruppen 01; 01' bedruckt und in gewünschter Weise einzeln oder gruppenweise versetzt auf den Falztrichter 13 geführt werden (siehe z. B. Fig. 5 bis Fig. 8).

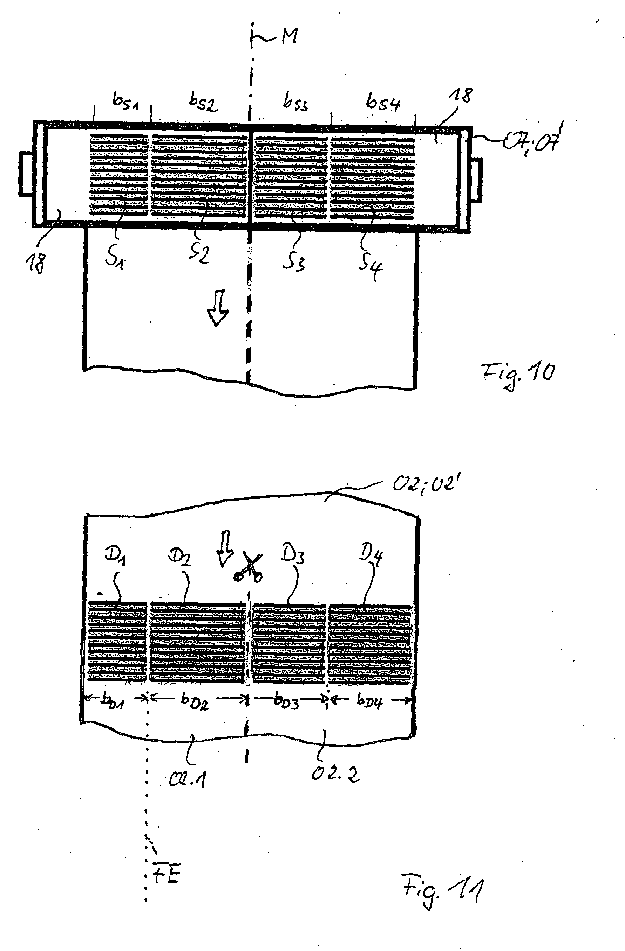

In der z. B. in Fig. 4 dargestellten Ausführung sind bzw. werden die zwei bzw. mindestens zwei zu versetzenden Bahnen 02; 02'; 02.x; 02'.y durch zwei Teilbahnen 02.1; 02.2 einer selben mehrfachbreiten, insbesondere doppeltbreiten Ursprungsbahn 02 gebildet. Im Bahnweg dieser Ursprungsbahn 02 ist eine mehrfachbreit ausgebildete Druckstellengruppe 01 bzw. zumindest ein mehrfachbreit ausgebildetes Druckwerk 11 vorgesehen, durch welche bzw. welches auf die Bahn 02 nebeneinander die Druckbilder von vier Druckseiten D₁; D₂; D₃; D₄ aufbringbar sind. Die Druckbilder der vier Druckseiten D₁; D₂; D₃; D₄ sind durch das Druckwerk 11; 11' derart auf die Bahn 02; 02' aufbringbar, dass sie paarweise auf jeweils dem Teil der im weiteren Verlauf durch Längsschnitt hergestellten bzw. herzustellenden ersten und zweiten Teilbahn 02.1; 02.2 zu liegen kommen. Zumindest die Sujets S₁; S₂; S₃; S₄ jeden Paares der paarweise aufzubringenden Druckseiten D₁; D₂; D₃; D₄.unterscheiden sich in ihrer in Axialrichtung verlaufenden Breite b_{S1}; b_{S2}; b_{S3}; b_{S4}. Z. B. weisen mindestens drei der vier nebeneinander angeordneten Sujets S₁; S₂; S₃; S₄ von Druckseiten D₁; D₂; D₃; D₄, vorzugsweise sämtliche nebeneinander angeordnete Sujets S₁; S₂; S₃; S₄ eine voneinander verschiedene Breite b_{S1}; b_{S2}; b_{S3}; b_{S4} in ihrer in Axialrichtung auf (siehe z. B. Fig. 4, Fig. 10 und Fig. 11).

Für die dargelegte und vorzugsweise sämtliche Ausführungen der Sonderproduktion P; p sind zumindest die beiden Sujets S₁; S₂; S₃; S₄ der paarweise aufzubringenden Druckseiten D₁; D₂; D₃; D₄ auf einer selben mehrfachbreiten Druckform 18, z. B. einer Panoramadruckform 18, angeordnet. Wie unten ausgeführt, kann diese vorzugsweise einen sujetfreien Randbereich aufweisen.

Nach dem Bedrucken wird die Bahn 02; 02' an der Längsschneideinrichtung 22 in die Teilbahnen 02.1; 02.2 geschnitten. In zumindest dem Bahnweg einer der Teilbahnen 02.1; 02.2 ist eine Wendeeinrichtung 26; 27 vorgesehen, durch welche diese Teilbahn 02.1; 02.2 in die Trichterflucht des Falztrichters 13 versetzt wird, wobei der Versatz derart bemessen ist, dass diese Teilbahn 02.2 zur anderen Teilbahn 02.1 seitlich versetzt auf den Falztrichter 13 aufläuft. Die ggf. nicht zu versetzende Teilbahn 02.1 kann die Druckstellengruppe 01; 01' bereits in einer Flucht derart durchlaufen, dort bedruckt werden und diese verlassen, so dass die zwischen den beiden dieser Teilbahn 02.1 zugeordneten Sujets S₁; S₂; S₃; S₄ verlaufende Stoßlinie in der Flucht der Falzebene FE des Falztrichters 13 verläuft.

Die auf dem selben Formzylinder 07; 07' nebeneinander vorgesehenen Sujets S₁; S₂; S₃; S₄ können auf einer durchgehenden Druckform 18 oder auf mindestens zwei, z. B. wie dargestellt jeweils genau zwei, Sujets S₁; S₂; S₃; S₄ nebeneinander tragenden Mahrfachdruckformen angeordnet sein. Vorzugsweise reicht die Druckform 18 bzw. reichen die nebeneinander angeordneten Druckformen 18 in Summe über die gesamte wirksame Breite des Formzylinders 07; 07'. Auf der Druckform 18 bzw. auf den äußeren Druckformen 18 verbleiben dann z. B. sujetfreie Bereiche. Die mehrfachbreiten Druckformen 18 sind bzw. werden, was deren in Umfangsrichtung die Druckform 18 halbierende Symmetrieachse betrifft, unsymmetrisch mit Sujets S₁; S₂; S₃; S₄ belichtet. Für den Fall eines direkt zu bebildenden Formzylinders 07; 07' wird dessen Mantelfläche im entsprechenden Muster der Sujets S₁; S₂; S₃; S₄ ohne das Erfordernis von lösbaren Druckformen 17; 18 bebildet.

Die andere Bahnseite wird in der selben weise durch ein entsprechendes Druckwerk 11 bzw. Druckwerke 11 einer Druckstellengruppe 01; 01' bedruckt, wobei die Druckseiten Dⱼ der beiden Bahnseiten in Deckung sind.

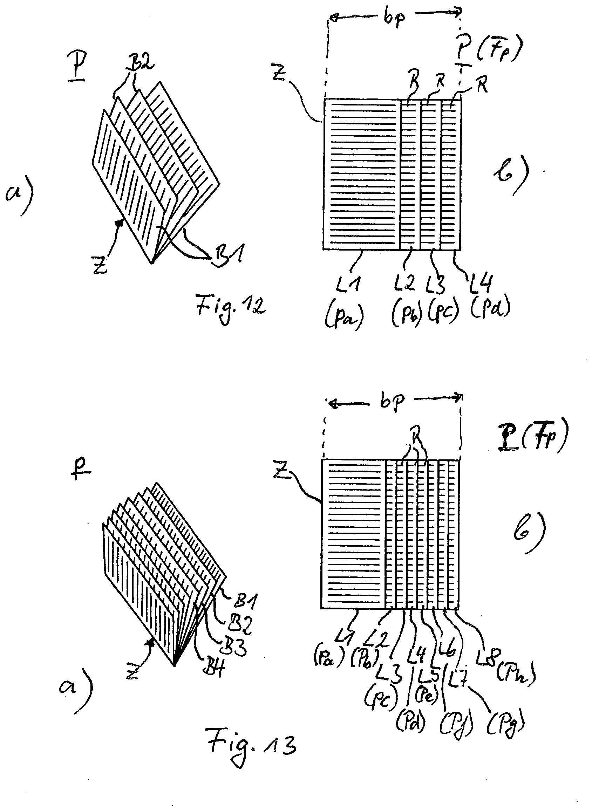

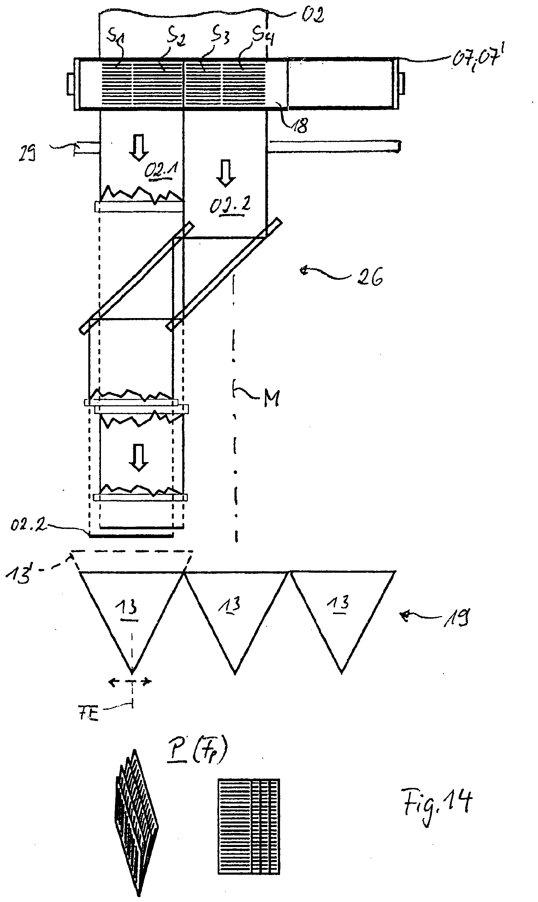

Durch die beiden in dieser Weise beidseitig bedruckten und versetzt auf den Falztrichter 13 geführten Bahnen 02.1; 02.2 ist in Einfachproduktion doppeltrunder Formzylinder 07; 07' oder mit einfachrunden Formzylindern 07; 07' ein achtseitiges Produkt P; p, insbesondere Broadsheetprodukt P, herstellbar, welches in o. g. Weise versetze einlagige Produktabschnitte pₐ; p_{b}; p_{c}; p_{d} aufweist (siehe z. B. Fig. 4 und Fig. 12). Die Anzahl der einzeln oder gruppenweise versetzt auf den Falztrichter 13 geführter Bahnen 02; 02' oder auch Gruppen von Bahnen 02; 02' in o. g. Weise kann in dieser Ausführung dadurch erhöht werden, dass eine mehr als doppeltbreite Bahn 02; 02' in einer mehr als doppeltbreiten, z. B. dreifachbreiten Druckstellengruppe 01; 01' (siehe z. B. Fig. 14) bedruckt wird und hieraus mehr als zwei, z. B. drei, Teilbahnen 02.x; 02'.ygewonnen und entsprechend einzeln oder gruppenweise versetzt auf den Falztrichter 13 geführt werden (siehe z. B. Fig. 5 bis Fig. 8).

Die Anzahl der einzeln oder gruppenweise versetzt auf den Falztrichter 13 geführter Teilbahnen 02.1; 02.2 oder auch Gruppen von Teilbahnen 02.1; 02.2 kann in einem weiteren Ausführungsbeispiel durch eine oder mehrere zusätzliche Ursprungsbahnen 02' und/oder eine oder mehrere zusätzliche mehrfachbreite Druckstellengruppen 01' erhöht werden (siehe z. B. Fig. 9 und Fig. 13). Hierbei werden vier aus zwei in zwei Druckstellengruppen 01; 01' bedruckten Ursprungsbahnen 02; 02' gewonnene Bahnen 02.1; 02.2; 02'.1; 02'.2, nämlich Teilbahnen 02.1; 02.2; 02'.1; 02'.2, zueinander und zur Falzebene FE versetzt dem Falztrichter 13 zugeführt.

In der z. B. in Fig. 9 dargestellten Ausführung sind bzw. werden vier Bahnen 02.x; 02'.y als Teilbahnen 02.x; 02'.y zweier mehrfachbreiter, insbesondere doppeltbreiter Ursprungsbahnen 02; 02' versetzt auf den Falztrichter 13 geführt.. Im Bahnweg dieser Ursprungsbahnen 02; 02' ist jeweils eine mehrfachbreit, z. B. doppeltbreit ausgebildete Druckstellengruppe 01; 01' bzw. zumindest jeweils ein mehrfachbreit, z. B. doppeltbreit ausgebildetes Druckwerk 11 vorgesehen, durch welche bzw. welches auf die jeweilige Bahn 02; 02' nebeneinander die Druckbilder von jeweils vier Druckseiten D₁; D₂; D₃;. D₄; D₅; D₆; D₇; D₈ aufbringbar sind. Die Druckbilder der jeweils vier Druckseiten D₁; D₂; D₃; D₄; D₅; D₆; D₇; D₈ sind durch das betreffende Druckwerk 11; 11' wieder derart auf die Bahn 02; 02' aufbringbar, dass sie paarweise auf jeweils dem Teil der im weiteren Verlauf durch Längsschnitt hergestellten bzw. herzustellenden vier Teilbahnen 02.1; 02.2; 02'.1; 02'.2 zu liegen kommen. Zumindest die beiden Sujets S₁; S₂; S₃; S₄; S₅; S₆; S₇; S₈ jeden Paares der auf je eine Teilbahn 02.1; 02.2; 02'.1; 02'.2 paarweise aufzubringenden Druckseiten D₁; D₂; D₃; D₄; D₅; D₆; D₇; D₈.unterscheiden sich in ihrer in Axialrichtung verlaufenden Breite b_{S1}; b_{S2}; b_{S3}; b_{S4}; b_{S5}; b_{S6}; b_{S7}; b_{S8}. Z. B. weisen jeweils mindestens drei der vier auf einem selben Formzylinder 07; 07' nebeneinander angeordneten Sujets S₁; S₂; S₃; S₄; S₅; S₆; S₇; S₈ von Druckseiten D₁; D₂; D₃; D₄; D₅; D₆; D₇; D₈, insbesondere sämtliche vier auf einem selben Formzylinder 07; 07' nebeneinander angeordnete Sujets S₁; S₂; S₃; S₄; S₅; S₆; S₇; S₈ eine voneinander verschiedene Breite b_{S1}; b_{S2}; b_{S3}; b_{S4}; b_{S5}; b_{S6}; b_{S7}; b_{S8} in Axialrichtung auf. Um durch die vier Teilbahnen 02.1; 02.2; 02'.1; 02'.2 ein Produkt P; p mit acht zueinander versetzten Produktabschnitte pₐ; p_{b}; p_{c}; p_{d}; pₑ; p_{f}; p_{g}; pₕ herzustellen weisen sämtliche acht auf den beiden mit den beiden Ursprungsbahnen 02; 02' auf je einer Bahnseite zusammen wirkenden Formzylinder 07; 07' nebeneinander angeordnete Sujets S₁; S₂; S₃; S₄; S₅; S₆; S₇; S₈ eine voneinander verschiedene Breite b_{S1}; b_{S2}; b_{S3}; b_{S4}; b_{S5}; b_{S6}; b_{S7}; b_{S8} in Axialrichtung auf (siehe z. B. Fig. 9 und Fig. 13).

Die jeweils anderen Bahnseiten der beiden Ursprungsbahnen 02; 02' werden in der selben weise durch entsprechende Druckwerke 11 bzw. Druckwerke 11 von Druckstellengruppen 01; 01' bedruckt, wobei die Druckseiten Dⱼ der beiden Bahnseiten wieder in Deckung zueinander angeordnet sind.

Vorzugsweise sind in einem jeweiligen Bahnweg zumindest dreier der vier Teilbahnen 02.1; 02.2; 02'.1; 02'.2 Wendeeinrichtungen 26; 27 vorgesehen, durch welche die betreffende Teilbahn 02.1; 02.2; 02'.1; 02'.2 in die Trichterflucht des Falztrichters 13 und/oder seitlich zu jeweils den übrigen Teilbahnen 02.1; 02.2; 02'.1; 02'.2 versetzbar ist. Zumindest eine der Teilbahnen 02.1; 02.2; 02'.1; 02'.2 kann vorzugsweise ohne Versetzen im Geradeauslauf auf den Falztrichter 13 geführt werden bzw. sein, wenn der diese Teilbahn 02'.1 betreffende Teil der Ursprungsbahn 02' bereits in einer Flucht des Falztrichters 13 die Druckstellengruppe 01' derart durchläuft, so dass die zwischen den beiden dieser Teilbahn 02'.1 zugeordneten Sujets S₁; S₂; S₃; S₄, S₅; S₆; S₇; S₈ verlaufende Stoßlinie in der Flucht der Falzebene FE des Falztrichters 13 verläuft. Vorzugsweise ist im Bahnweg einer der Teilbahnen 02.1; 02.2; 02'.1; 02'.2 eine Wendeeinrichtung 27 mit zugeordneter Bay-Window-Führung 34 vorgesehen. Insbesondere kann diese im Bahnweg einer Teilbahn 02.1 vorgesehen sein, deren betreffender Teil der Ursprungsbahn 02 bereits in einer Flucht des Falztrichters 13, d. h. im durch die nutzbare Breite b13 des Falztrichters 13, z. B. Trichterbreite b13, vorgegebenen Korridor, die betreffende Druckstellengruppe 01' durchläuft, jedoch noch innerhalb der Trichterbreite b13, z. B. bis zu 150 mm, zu versetzen ist. Die wirksame Trichterbreite b13 kann in beispielsweise einer Standardmaschine der Breite zweier Druckseiten D⁰ⱼ mit Nennbreite b_{D}⁰ entsprechen, d. h. er ist bezogen auf das Standardformat F⁰; f⁰ z. B. "einfachbreit" oder auch "normalbreit" ausgebildet.

Durch die vier in dieser Weise beidseitig bedruckten und versetzt auf den Falztrichter 13 geführten Bahnen 02.1; 02.2; 02'.1; 02'.2, insbesondere Teilbahnen 02.1; 02.2; 02'.1; 02'.2, ist in Einfachproduktion doppeltrunder Formzylinder 07; 07' oder mit einfachrunden Formzylindern 07; 07' ein sechzehnseitiges Produkt P; p, insbesondere Broadsheetprodukt P, herstellbar, welches in o. g. Weise acht versetze einlagige Produktabschnitte pₐ; p_{b}; p_{c}; p_{d}; pₑ; p_{f}; p_{g}; pₕ aufweist (siehe z. B. Fig. 9 und Fig. 13). Die Anzahl der einzeln oder gruppenweise versetzt auf den Falztrichter 13 geführter Teilbahnen 02.1; 02.2; 02'.1; 02'.2 oder auch Gruppen von Teilbahnen 02.1; 02.2; 02'.1; 02'.2 in o. g. Weise kann in dieser Ausführung dadurch weiter erhöht werden, dass eine oder beide der Bahnen 02; 02' als mehr als doppeltbreite Bahnen 02; 02' in z. B. zwei mehr als doppeltbreiten, z. B. dreifachbreiten Druckstellengruppe 01; 01' bedruckt werden und hieraus mehr als vier, z. B. fünf oder sechs, Teilbahnen 02.x; 02'.y gewonnen und entsprechend einzeln oder gruppenweise versetzt auf den Falztrichter 13 geführt werden (siehe z. B. entsprechendes zu Fig. 5 bis Fig. 8). Alternativ kann die Anzahl der einzeln oder gruppenweise versetzt auf den Falztrichter 13 geführter Teilbahnen 02.1; 02.2; 02'.1; 02'.2 oder auch Gruppen von Teilbahnen 02.1; 02.2; 02'.1; 02'.2 auch dadurch erhöht werden, indem mehr als zwei doppeltbreite Ursprungsbahnen 02; 02' und mehr als zwei mehrfachbreite Druckstellengruppen 01; 01' vorgesehen sind.

In einer vorteilhaften Weiterbildung einer Druckmaschine bzw. Vorrichtung ist diese mit einer oder mit mehreren dreifachbreiten Druckstellengruppen 01; 01' (siehe z. B. exemplarisch Fig. 14) ausgebildet. Diese kann beispielsweise in einer Standardproduktion mit Standardprodukten P⁰; p⁰ mit einer oder mehreren bezogen auf das Standardformat F⁰; f⁰ dreifachbreiten Bahnen 02; 02' betrieben sein bzw. werden. In einer Sonderproduktion mit Sonderprodukten P; p ist diese beispielsweise mit einer Ursprungsbahn 02; 02' einer gegenüber der vollen, maximal möglichen Breite kleineren Bahnbreite b02; b02', insbesondere mit einer Bahnbreite b02; b02' betrieben, die z. B. höchstens Zweidritteln der maximal möglichen Bahnbreite b02; b02' entspricht. Diese ist bzw. wird bezogen auf die Maschinenmittelebene M außermittig durch die Druckstellengruppe 01; 01' geführt und auf einer Bahnseite mit lediglich vier Druckseiten D₁; D₂; D₃; D₄ nebeneinander bedruckt, bevor sie in zwei Teilbahnen 02.1; 02.2 geschnitten und diese im weiteren entsprechend der Ausführung gemäß Fig. 4 übereinander versetzt auf den Falztrichter 13 geführt werden. Das hierzu oben im Zusammenhang mit einer Ausführung nach Fig. 4 erläuterte, z. B. dem Versetzen mittels einer Wendeeinrichtung 26, der Ausrichtung der auflaufenden Teilbahnen 02.1; 02.1, dem zu erzeugenden Produkt P; p und der Erhöhung der Anzahl von versetzten Bahnen gemäß Fig. 5 bis 8 sind entsprechend anzuwenden.

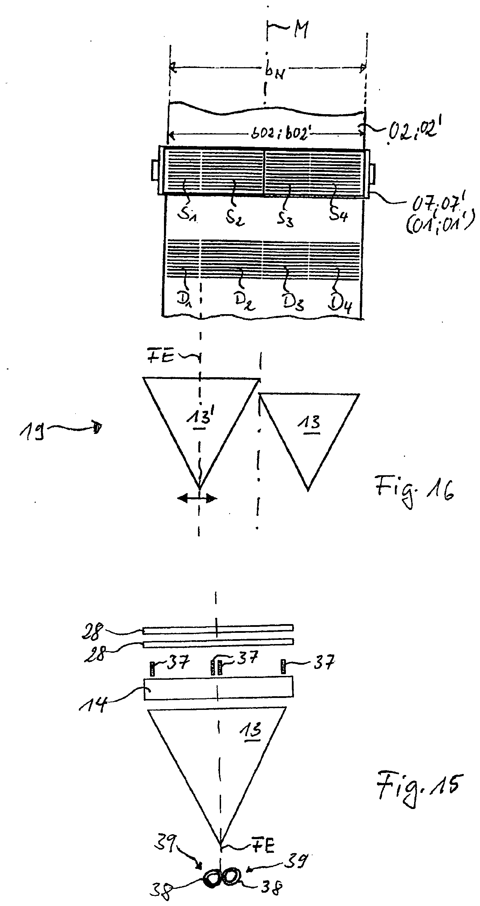

Exemplarisch für die übrigen Ausführungen ist in den Figuren Fig. 1 und Fig. 4 die dem Falztrichter 13 vorgeordnete Zugwalze 14 dargestellt und bezeichnet. Dieser Zugwalze 14 sind vorzugsweise an diese anstellbare Andrückelemente 37, z. B. Rollen 37, insbesondere Gummirollen 37, zugeordnet, welche die auf den Falztrichter 13 zu führende Bahn 02; 02'; 02.1; 02.2; 02'.1; 02'.2 bzw. das Bündel von Bahnen 02; 02'; 02.1; 02.2; 02'.1; 02'.2 in angestellter Lage an die Oberfläche der Zugwalze 14 drücken (siehe z. B. lediglich angedeutet in Fig. 4 und detaillierter in Fig. 15). Es sind z. B. in Flucht zum nachgeordneten Falztrichter 13 z. B. beidseitig der Falzebene FE mindestens je eine der Falzebene FE ferne Rolle 37 vorgesehen. Zusätzlich kann z. B. eine im Bereich der Falzebene FE abrollende Rolle 37 oder beidseitig zwei nah, insbesondere näher als die ersten Rollen 37 zur Falzebene FE angeordnete Rollen 37, als Einzelrollen oder als Doppelrolle ausgebildet, vorgesehen sein. Die beiden falzebenenfernen Rollen 37 laufen zumindest in Standardproduktion z. B. in einem druckbildfreien Randbereich der obersten Bahn 02; 02'; 02.1; 02.2; 02'.1; 02'.2 ab. Die ggf. vorgesehenen falzebenennahen Rollen 37 rollen zumindest in Standardproduktion z. B. eng beieinander nahe der Falzebene FE in z. B. einem druckbildfreien Mittelbereich der obersten Bahn 02; 02'; 02.1; 02.2; 02'.1; 02'.2 ab. Ebenso rollt in der Ausführung lediglich einer mittleren Rolle 37 diese z. B. im Bereich der Falzebene FE in z. B. einem druckbildfreien Bereich der obersten Bahn 02; 02'; 02.1; 02.2; 02'.1; 02'.2 ab. In einer vorteilhaften Weiterbildung sämtlicher Ausführungen der genanten Druckmaschine bzw. der Vorrichtung, wobei diese beispielsweise wahlweise zwischen der Standardproduktion und einer Sonderproduktion und/oder wahlweise zwischen unterschiedlichen Sonderproduktionen betrieben bzw. betreibbar sein soll, ist vorzugsweise wenigstens eine der mit der Zuwalze 14 zusammen wirkenden Rollen 37 quer zur Laufrichtung der einlaufenden Bahn 02; 02'; 02.1; 02.2; 02'.1; 02'.2 bewegbar. Insbesondere ist zumindest eine von mehreren dem Falztrichter 13 in dessen Flucht vorgeordeten Rollen 37 oder Doppelrollen unabhängig von einer anderen Rolle 37, z. B. einzeln, bewegbar angeordnet. So ist es möglich, je nach Versatz und nach Breite b1; b2; b3; b4 der auflaufenden Bahn 02; 02'; 02.1; 02.2; 02'.1; 02'.2, insbesondere der der Rolle 37 zugewandten äußersten Bahn 02; 02'; 02.1; 02.2; 02'.1; 02'.2, die Rolle 37 in ihrer Lage an einen druckbildfreien Streifen, z. B. Randstreifen, dieser Bahn 02; 02'; 02.1; 02.2; 02'.1; 02'.2 anzupassen.

Im Bahnweg einer der Bahnen 02; 02'; 02.x; 02'.y und/oder im Bahnweg eines die beiden Bahnen 02; 02'; 02.x; 02'.y umfassenden Bündels und/oder im Strangweg eines die beiden Bahnen 02; 02'; 02.x; 02'.y enthaltenden Falzstranges 16 ist in einer vorteilhaften Weiterbildung der genannten Ausführungen somit eine Zugwalze 14; 29; 39 mit wenigstens einem zugeordneten Andrückelement 37; 38 vorgesehen, welches in Axialrichtung der Zugwalze 14; 29; 39, insbesondere unabhängig von einem oder mehreren weiteren Andrückelement 37; 38, bewegbar angeordnet ist.

Unabhängig hiervon, oder vorteilhaft zusätzlich zur querbeweglichen Rolle 37, kann in einer Weiterbildung der Druckmaschine bzw. Vorrichtung für sämtliche dargelegte Ausführungen wenigstens ein z. B. als Zugring 38 einer im dem Falztrichter 13 nachgeordneten Strangweg angeordneten Zugwalze 39 ausgebildetes Andrückelement 38, z. B. Zugelement 38 quer zum Stranglauf bewegbar angeordnet sein (siehe z. B. exemplarisch in Fig. 1 und detailliert in Fig. 15). Insbesondere sind quer zum Stranglauf mehrere, z. B. zwei, derartige Zugelemente 38 beabstandet voneinander angeordnet, wobei wenigstens eines der Zugelemente 38 unabhängig von dem anderen in genannter Weise bewegbar ist. In einer alternativen Ausführung wirkt eine Zugwalze 37 nicht mit einer zweiten, korrespondierende Zugringe 38 als aufweisenden Andrückelemente 38 aufweisenden Zugwalze 39, sondern mit als Rollen 38 ausgebildeten Andrückelementen 38 zusammen. Auch hier ist somit die Lage des Zugelementes 38 an einen druckbildfreien Steifen der obersten Stranglage anpassbar. Die Breite des Zugringes 38, insbesondere zumindest des bewegbaren Zugrings 38, ist beispielsweise kleiner als üblich, z. B. im Bereich der umlaufenden Wirkfläche höchstens 15 mm, vorzugsweise höchstens 10 mm, ausgeführt.

Für sämtliche Ausführungen mit wenigstens einer Wendeeinrichtung 26; 27 kann es von besonderem Vorteil sein, für eine oder mehrere Wendestangen 24 einer oder mehrerer Wendeeinrichtungen 26; 27 neben einer für die Standardproduktion einzunehmenden Position eine quer zur Laufrichtung der einlaufenden Bahn 02; 02'; 02.1; 02.2; 02',1; 02'.2 zumindest geringfügig, z. B. um mindestens 5 mm, beabstandete Position vorgesehen bzw. vorzusehen. Dadurch ist es z. B. möglich, zwischen der Standardproduktion und einer Sonderproduktion zu wechseln Die betreffende Wendestange 24 ist dann, z. B. über einen Antrieb fernbetätigt, quer zur Einlaufrichtung der Bahn 02; 02'; 02.1; 02.2; 02',1; 02'.2 bewegbar.

In den vorstehenden Beispielen doppeltbreiter Druckwerksgruppen 01; 01' bzw. Formzylinder 07; 07' wird bzw. ist die Bahn 02; 02' vorzugsweise jeweils mittig zur Maschinenmittelebene M durch die Druckstellengruppen 01; 01' geführt. Die Bahnbreite b02; b02' der in Sonderproduktion zu verarbeitender Bahnen 02; 02' ist in den vorangehenden Beispielen doppeltbreiter Druckwerksgruppen 01; 01' bzw. Formzylinder 07; 07' schmaler als die Breite zweier nebeneinander angeordneter Standarddruckseiten D⁰ der Breite b⁰_{D}. Die breiteste der Lagen L1; L2; L3; L4; L5; L6; L7; L8 bzw. der breiteste der Produktabschnitte pₐ; p_{b}; p_{c}; p_{d}; pₑ; p_{f}; p_{g}; pₕ im erzeugten Produkt P; p weist beispielsweise jeweils eine Breite b_{D1}; b_{D2}; b_{D3}; b_{D4} auf, die kleiner oder gleich der Nennbreite b_{D}⁰ des für den Formzylinder 07; 07' bzw. das Druckwerk 11; 11' bzw. die Druckstellengruppe 01; 01' angegebenen Standardformates F⁰; f⁰ ist. Die Breite dieser breitesten Lage bzw. dieses breitesten Produktabschnittes stellt die effektive Produktbreite b_{P} dar und kann z. B. etwa als Format Fₚ; fₚ des Produktes P; p verstanden sein. Die übrigen, versetzten Lagen L1; L2; L3; L4; L5; L6; L7; L8 bzw. Produktabschnitte pₐ; p_{b}; p_{c}; p_{d}; pₑ; p_{f}; p_{g}; pₕ weisen dann eine geringere Breite b_{D1}; b_{D2}; b_{D3}; b_{D4} auf. Es bleiben in Sonderproduktion andererseits aufgrund dessen Breitenbereiche der Formzylinder 07; 07' bzw. der Druckwerk 11; 11' bzw. der Druckstellengruppe(n) 01; 01' ungenutzt.

Um diese Beschränkung der effektiven Produktbreite b_{P} auf die Nennbreite b_{D}⁰ zu umgehen, ist es in einer besonders vorteilhaften Weiterbildung der Vorrichtung bzw. Druckmaschine vorgesehen, den Falztrichter 13 bzw. im Fall mehrerer Falztrichter 13 zumindest den mit den versetzten Bahnen zu beaufschlagenden Falztrichter 13 mit einer wirksamen Breite b13 auszuführen, welche größer ist als die doppelte Nennbreite b_{D}⁰ des für den Formzylinder 07; 07' bzw. das Druckwerk 11; 11' bzw. die Druckstellengruppe 01; 01' angegebenen Standardformates F⁰; f⁰. Ein derart breiterer Falztrichter 13', welcher den Falztrichter 13 aus den vorangehenden Beispielen ersetzen kann, ist im Folgenden und in Fig. 16 durch Apostrophierung kenntlich gemacht. Ein derartiger Falztrichter 13' kann wie dargestellt den einzigen oder einen von mehreren nebeneinander und/oder übereinander vorgesehener, zweistandardseitenbreiten Falztrichter 13 ersetzten. In diesem Fall ist dieser in bevorzugter Ausführung - z. B. mit seiner Falzebene FE und/oder seiner Trichterspitze - quer zur Einlaufrichtung der auf ihn zu führenden Bahnen 02; 02'; 02.1; 02.2; 02',1; 02'.2 bewegbar ausgeführt. Je nach Erfordernis in der gewünschten effektiven Produktbreite b_{P} der in Sonderproduktion herzustellenden Produkte P; p ist der Falztrichter 13' mit einer gegenüber der doppelten Nennbreite b_{D}⁰ größeren wirksamen Breite b13 ausgeführt, welche dem Doppelten der geforderten effektiven Produktbreite b_{P} des Sonderproduktes P; p entspricht. Der Mindestverschiebeweg entspricht beispielsweise der Differenz zwischen maximal geforderter effektiver Produktbreite b_{P} und der Nennbreite b⁰. Die dem Grunde nach in Fig. 16 anhand eines doppeltbreiten Formzylinders 07; 07' bzw. einer doppeltbreiten (m = 2, n = 4) Druckstellengruppe 01; 01' bzw. Druckmaschine dargelegte Lehre bzgl. der breiteren Ausführung eines Falztrichters 13' und/oder der breiteren Ausbildung der effektiven Produktbreite b_{P} ist auf sämtliche vorstehenden Beispiele (exemplarisch in Fig. 4 und Fig. 9 lediglich mit zusätzlichem Bezugszeichen 13' angedeutet) mit und insbesondere auch auf eine Anwendung mit einem dreifachtbreiten (m = 3, n = 6) Formzylinders 07; 07' bzw. einer dreifachbreiten Druckstellengruppe 01; 01' bzw. Druckmaschine zu übertragen (siehe z. B. in Fig. 14 strichliert angedeutet). Hier kann beispielsweise einer von drei in einer Trichterebene 19 angeordneten Falztrichtern 13 als breiterer Falztrichter 13' ausgebildet und vorzugsweise quer beweglich ausgebildet sein. Es kann jedoch auch im Fall einer doppeltbreiten Maschine zusätzlich zu zwei oder im Fall einer dreifachbreiten Maschine zusätzlich zu drei einfachbreiten Falztrichtern 13 einer Trichterfalzebene 19 daneben oder darüber ein zusätzlicher, breiterer Falztrichter 13' vorgesehen sein.

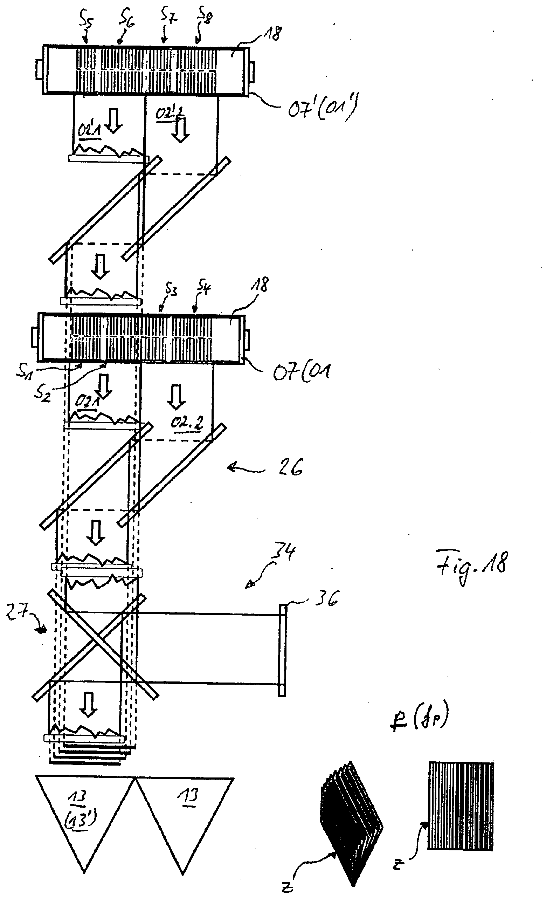

Die vorstehenden, anhand von in Broadsheetanordnung angeordneten Sujets S₁; S₂; S₃; S₄; S₅; S₆; S₇; S₈ erläuterten Beispiele sind auf Ausführungen anzuwenden, in welchen die auf dem Formzylinder 07; 07' bzw. auf Formzylindern 07; 07' der insbesondere als Drucktürme 01; 01' ausgebildeten Druckstellengruppen 01; 01' die Sujets S₁; S₂; S₃; S₄; S₅; S₆; S₇; S₈ mit Druckbildvorlagen in Tabloidanordnung angeordnet werden bzw. sind. Exemplarisch sind hierfür anhand der zu Fig. 4 vergleichbaren Fig. 17 und der zu Fig. 9 vergleichbaren Fig. 18 zwei Beispiele gegeben, welche auf die in der Beschreibung angegebenen Varianten anzuwenden ist. Die in den Figuren Fig. 4, Fig. 9 und Fig. 14 auf die Ausbildung der Sujets S₁; S₂; S₃; S₄; S₅; S₆; S₇; S₈ dargestellten Details und Bezugszeichen sind entsprechend anzuwenden. Auch die in Verbindung mit Fig. 5 bis Fig. 8 angegebenen Varianten und die im Zusammenhang mit den Figuren Fig. 15 und Fig. 16 angegebenen Weiterbildungen sind auf die Sonderproduktion p mit Tabloidanordnung anzuwenden.

Die Sonderproduktion kann in einer ersten Ausführung der Druckmaschine bzw. Vorrichtung und/oder des Verfahrens mit lediglich im Coldset bedruckten, d. h. ohne einen Trockner oder zumindest ohne aktiven Trockner 09 im Bahnweg der der herangezogenen Bahn(en) 02; 02' (mit z. B. entsprechendem Papiertyp, s. o.) ausgeführt sein. Das Produkt P; p weist dann ausschließlich Lagen L1; L2; L3; L4; L5; L6; L7; L8 aus Coldsetpapier, z. B., ungestrichenes (oder allenfalls geringfügig gestrichenes) Papier, z. B. Zeitungspapier, auf.

In einer anderen Ausführung oder vorzugsweise zur ersten Ausführung bzw. Produktionsart wahlweise kann die Sonderproduktion in einer zweiten Ausführung der Vorrichtung bzw. des Verfahrens mit lediglich im Heatset bedruckten, d. h. durch einen aktiven Trockner 09; 09' geführten Bahn(en) 02; 02' (mit z. B. entsprechendem Papiertyp, s. o.) ausgeführt sein. Das Produkt P; p weist dann ausschließlich Lagen L1; L2; L3; L4; L5; L6; L7; L8 aus Heatsetpapier, z. B. gestrichenes Papier (s. o.) auf.

In einer dritten Ausführung bzw. einer vorteilhaften Weiterbildung dieser ersten und zweiten Ausführung kann die Druckmaschine bzw. Vorrichtung und/oder des Verfahrens derart ausgebildet sein, sodass in Normalproduktion durch die Druckstellengruppe(n) 01; 01' bzw. Drucktürme 01; 01' ein Standardprodukt P⁰; p⁰ lediglich aus Bahnen 02; 02' im Coldsetverfahren bzw. aus Coldsetpapier, und in Sonderproduktion ein Sonderprodukt P; p durch eine oder mehrere der Druckstellengruppen 01; 01' bzw. Drucktürme 01; 01' lediglich aus Bahnen 02; 02' aus Heatsetpapier hergestellt wird bzw. herstellbar ist. In einer gemischten Variante kann in Sonderproduktion auch ein gemischtes Produkt P; p in Heatset- und Coldsetproduktion mit Lagen L1; L2; L3; L4; L5; L6; L7; L8 aus Heatsetpapier und Lagen L1; L2; L3; L4; L5; L6; L7; L8 aus Coldsetpapier hergestellt sein bzw. werden, wobei z. B. zumindest die oberste der auf den Falztrichter 13; 13' geführten Bahnen 02; 02'; 02.1; 02.2; 02',1; 02'.2 des Bündels als im Heatset bedruckte Heatsetbahn ausgebildet ist.

### Bezugszeichenliste

- 01: Druckstellengruppe, Druckwerksgruppe, Druckturm, erster
- 02: Bahn, Papierbahn, Ursprungsbahn, Vollbahn, erste, Coldsetbahn
- 03: Rollenabwickler, Rollenwechsler
- 04: Falzaufbau
- 05: -
- 06: Falzapparat
- 07: Druckwerkszylinder, Formzylinder, erster
- 08: Übertragungszylinder
- 09: Trockner
- 10: -
- 11: Druckwerk, Offsetdruckwerk
- 12: Walzengruppe
- 13: Falztrichter
- 14: Bahnleitmittel, Walze, Zugwalze
- 15: -
- 16: Strang
- 17: Druckform, Einzeldruckform
- 18: Druckform, Mehrfachdruckform, Panoramadruckform, Superpanoramadruckform
- 19: Trichterebene
- 20: -
- 21: Längsschneideinrichtung
- 22: Längsschneidmesser
- 23: Wendevorrichtung, Wendeturm
- 24: Bahnleitmittel, Wendestange
- 25: -
- 26: Wendeeinrichtung, Wendedeck
- 27: Wendeeinrichtung, Wendedeck
- 28: Bahnleitmittel, Leitwalze
- 29: Bahnleitmittel, Leit- und/oder Zugwalze
- 30: -
- 31: Längsregistereinrichtung
- 32: Bahnleitmittel, Walze
- 33: Bahnleitmittel, Walze, Registerwalze
- 34: Bay-Window-Führung
- 35: -
- 36: Bahnleitelement, Walze
- 37: Andrückelement, Rolle, Gummirolle
- 38: Andrückelement, Zugelement, Zugring, Rolle
- 39: Zugwalze

- 01': Druckwerksgruppe, Druckturm
- 02': Bahn, Papierbahn, Ursprungsbahn, Vollbahn
- 03': Rollenabwickler, Rollenwechsler
- 07': Druckwerkszylinder, Formzylinder
- 08': Übertragungszylinder
- 09': Trockner
- 11': Druckwerk, Offsetdruckwerk
- 13': Falztrichter

- 02.x: Teilbahn (02) (x = 1, 2, 3, 4, ...)
- 02'.y: Teilbahn (02') (y = 1, 2, 3, 4, ...)
- 02".1: Teilbahn

- b1: Breite
- b2: Breite
- b3: Breite
- b4: Breite

- b02: Breite, Bahnbreite
- b02': Breite, Bahnbreite

- b13: Breite, Trichterbreite

- B1: Bogen
- B2: Bogen
- B3: Bogen
- B4: Bogen

- M1: Bahnmitte
- M2: Bahnmitte

- T1: Transportrichtung

- b⁰: Breite, Nennbreite, Druckseitenbreite
- b_{D}⁰: Breite, Nennbreite
- b_{D,j}: Breite, Druckseitenbreite, Breite (j = 1, 2, 3, ...)
- b_{N}: Nennweite
- b_{P}: Breite (P, p)
- b_{S}⁰: Breite, Sujetbreite (F⁰; f⁰)
- b_{Su}: Breite, Sujetbreite (u = 1, 2, 3, ...)

- Dⱼ: Druckseite (Broadsheet) (j = 1 bis 8)
- D⁰ⱼ: Druckseite
- dⱼ: Druckseite (Tabloid) (j = 1 bis 8)
- d⁰ⱼ: Druckseite

- F⁰: Druckseitenformat, Format, Standardformat (Broadsheet)
- f⁰: Druckseitenformat, Format, Standardformat (Tabloid)

- Fₚ: Format
- fₚ: Format

- pₐ: Produktabschnitt
- p_{b}: Produktabschnitt
- p_{c}: Produktabschnitt
- p_{d}: Produktabschnitt

- P: Produkt, Druckprodukt, Zeitungsprodukt, Sonderprodukt, Teilprodukt, Sektion, Broadsheetprodukt
- p: Produkt, Druckprodukt, Zeitungsprodukt, Sonderprodukt, Teilprodukt, Sektion, Tabloidprodukt

- P⁰: Produkt, Standardprodukt, Zeitungsprodukt, Broadsheetprodukt
- p⁰: Produkt, Standardprodukt, Zeitungsprodukt, Broadsheetprodukt

- PS₁: Produktschenkel (vorderer)
- PS₂: Produktschenkel (hinterer)

- Sⱼ: Druckseitensujet, Sujet (j = 1 bis 8)
- S⁰ⱼ: Druckseitensujet, Sujet

- Li: Lage (i = 1 ... 8)

- FE: Falzebene

- F: Flucht, Maschinenflucht
- M: Maschinenmittelebene
- R: Druckseitenbereich
- V: Versatz
- Z: Falz, Lesefalz, Rückenfalz

- Z: Falz

## Patentansprüche

1. Verfahren zur Herstellung eines Druckproduktes (P; p), insbesondere eines Zeitungsproduktes (P; p), wobei
- zunächst mindestens eine erste und eine zweite Bahn (02; 02'; 02.x; 02'.y) in der Weise hergestellt werden, dass sie durch ein selbes oder durch unterschiedliche Druckwerke (11; 11') jeweils auf zumindest einer ihrer Seiten die Druckbilder zweier Druckseiten (Dⱼ) nebeneinander tragen,
- und mindestens die erste und die zweite bedruckte Bahn (02; 02'; 02.x; 02'.y) stromabwärts zur Bildung eines Stranges (16) zusammen auf einen selben Falztrichter (13; 13') geführt werden,
- wobei die erste und die zweite Bahn (02; 02'; 02.x; 02'.y) mit ihren Bahnmitten (M1; M2) seitlich versetzt zueinander auf den Falztrichter (13; 13') geführt werden,
- wobei die erste und die zweite Bahn (02; 02'; 02.x; 02'.y) mit ihren Bahnmitten (M1; M2) jeweils seitlich versetzt zu einer einen Falz (Z; z) bildenden Falzebene (FE) des Falztrichters (13; 13') auf den Falztrichter (13; 13') geführt werden,
- und wobei die erste und die zweite Bahn (02; 02'; 02.x; 02'.y) mit beidseitig zu einer selben Seite hin zueinander versetzten Seitenkanten auf den Falztrichter (13; 13') geführt werden.

2. Verfahren nach Anspruch 1, **dadurch gekennzeichnet, dass** die erste und die zweite Bahn (02; 02'; 02.x; 02'.y) mit ihren Bahnmitten (M1; M2) jeweils zu einer selben Seite hin seitlich versetzt zur Falzebene (FE) des Falztrichters (13; 13') auf den Falztrichter (13; 13') geführt werden.

3. Verfahren nach Anspruch 1 oder 2, **dadurch gekennzeichnet, dass** die erste und die zweite Bahn (02; 02'; 02.x; 02'.y) bei deren Herstellung jeweils mit zwei Druckseiten (Dⱼ) von in Querrichtung unterschiedlicher Druckseitenbreite (b_{D}) bedruckt werden.

4. Verfahren nach Anspruch 3, **dadurch gekennzeichnet, dass** die zweite Bahn (02; 02'; 02.x; 02'.y) mit Druckbildern zweier Druckseiten (Dⱼ) bedruckt wird, von welcher sich zumindest eine in ihrer Druckseitenbreite (b_{D}) von den Druckseitenbreiten (b_{D}) der auf die erste Bahn (02; 02'; 02.x; 02'.y) gedruckten Druckseiten (Dⱼ) unterscheidet oder dass die zweite Bahn (02; 02'; 02.x; 02'.y) nebeneinander mit zwei Druckseiten (Dⱼ) zweier Druckseitenbreiten (b_{D}) bedruckt wird, welche sich von den Druckseitenbreiten (b_{D}) der nebeneinander auf die erste Bahn (02; 02'; 02.x; 02'.y) gedruckten Druckseiten (Dⱼ) unterscheiden.

5. Verfahren nach einem oder mehreren der Ansprüche 1, 2, 3 oder 4, **dadurch gekennzeichnet, dass** die erste und die zweite Bahn (02.x; 02'.y) als Teilbahnen (02.x; 02'.y) einer selben, insbesondere im noch ungeteilten Zustand bedruckten, Ursprungsbahn (02; 02') durch Längsschnitt gewonnen werden, oder dass die erste und die zweite Bahn (02; 02'; 02.x; 02'.y) durch unterschiedliche, in voneinander verschiedenen Druckwerken (11; 11') bedruckte Bahnen (02; 02'; 02.x; 02'.y) gebildet werden.

6. Verfahren nach einem oder mehreren der Ansprüche 1, 2, 3 oder 5, **dadurch gekennzeichnet, dass** als erste und zweite Bahn (02; 02'; 02.x; 02'.y) Bahnen (02; 02'; 02.x; 02'.y) einer selben Breite (b1; b2; b3; b4) auf den Falztrichter (13; 13') geführt werden und/oder dass zumindest eine der beiden Bahnen (02; 02'; 02.x; 02'.y) nach dem Bedrucken und vor dem Trichterauflauf quer zu ihrer Längsrichtung versetzt wird.

7. Verfahren nach Anspruch 1, 2, 3, 4, 5 oder 6, **dadurch gekennzeichnet, dass** wenigstens eine dritte Bahn (02; 02'; 02.x; 02'.y) mit ihrer Bahnmitte seitlich versetzt zur den Längsfalz bildenden Falzebene (FE) und/oder seitlich versetzt zu zumindest jeweils einer Seitenkante der ersten und der zweiten Bahn (02; 02'; 02.x; 02'.y) auf den Falztrichter (13; 13') geführt wird, und/oder dass mehrere, insbesondere vertikal benachbart zueinander angeordnete, erste Bahnen (02; 02'; 02.x; 02'.y) in einer selben seitlichen Ausrichtung zur Falzebene (FE) und/oder zu einer oder mehreren zweiten Bahnen (02; 02'; 02.x; 02'.y) und/oder mehrere, insbesondere vertikal benachbart zueinander angeordnete, zweite Bahnen (02; 02'; 02.x; 02'.y) in einer selben seitlichen Ausrichtung zur Falzebene (FE) und/oder zu einer oder mehreren ersten Bahnen (02; 02'; 02.x; 02'.y) übereinander auf den Falztrichter (13; 13') geführt werden.

8. Verfahren nach Anspruch 1, 2, 3, 4, 5, 6 oder 7, **dadurch gekennzeichnet, dass** zumindest die erste und zweite Bahn (02; 02'; 02.x; 02'.y) durch Druckwerke (11; 11') einer selben als Druckturm (01; 01') ausgebildeten Druckstellengruppe (01; 01') bedruckt werden, indem die Bahnen (02; 02'; 02.x; 02'.y) oder eine oder mehrere diesen zugrunde liegende Ursprungsbahnen (02.x; 02'.y) jeweils mehrere Druckwerke (11; 11') nacheinander im wesentlichen vertikal durchlaufen bzw. durchläuft und/oder eine Ursprungsbahn (02; 02') oder mehrere Bahnen (02; 02'; 02.x; 02'.y) nebeneinander mit Druckbildern stehender Druckseiten (Dⱼ) im Broadsheetformat bedruckt werden.

9. Vorrichtung zur Herstellung eines Druckproduktes (P; p), insbesondere zur Durchführung des Verfahrens zur Herstellung eines Druckproduktes (P; p) nach einem oder nach mehreren der Ansprüche 1 bis 8, mit Bahnleitmitteln (24; 28; 29; 32; 33; 36), über welche eine erste und eine zweite Bahn (02; 02'; 02.x; 02'.y) aus unterschiedlichen Druckwerken (11; 11') oder eine erste und eine zweite Bahn (02.x; 02'.y) als Teilbahnen (02.x; 02'.y) einer selben Ursprungsbahn (02; 02') aus einem selben Druckwerk (11; 11') entlang eines jeweiligen Bahnweges auf einen selben Falztrichter (13; 13') führbar sind, und wobei die beiden unterschiedlichen Druckwerke (11; 11') im Bahnweg der beiden Bahnen (02; 02'; 02.x; 02'.y) bzw. das Druckwerk (11; 11') im Bahnweg der den Teilbahnen (02.x; 02'.y) zugrunde liegenden Ursprungsbahn (02; 02') derart angeordnet und ausgebildet sind bzw. ist, sodass durch die beiden unterschiedlichen Druckwerke (11; 11') die beiden Bahnen (02; 02'; 02.x; 02'.y) bzw. durch das selbe Druckwerk (11; 11') zwei den stromabwärtigen Teilbahnen (02.x; 02'.y) entsprechende Bahnstreifen jeweils nebeneinander mit je zwei Druckseiten (Dⱼ) bedruckbar sind, und wobei auf zwei Druckwerkszylindern (07; 07') der den beiden Bahnen (02; 02'; 02.x; 02'.y) zugeordneten Druckwerke (11; 11') nebeneinander jeweils zwei oder auf einem Druckwerkszylinder (07; 07') des der gemeinsamen Ursprungsbahn zugeordneten Druckwerks (11; 11') nebeneinander vier Sujets (Sⱼ) der vier Druckseiten (Dⱼ) vorgesehen sind, **dadurch gekennzeichnet, dass** zumindest drei der vier auf den beiden Druckwerkszylindern (07; 07') der beiden voneinander verschiedenen Druckwerke (11; 11') paarweise nebeneinander vorgesehener oder zumindest drei der vier auf dem selben Druckwerkszylinder (07; 07') des selben Druckwerks (11; 11') nebeneinander angeordneten Sujet (Sⱼ) eine in Axialrichtung voneinander verschiedene Breite (b_{S1}; b_{S2}; b_{S3}; b_{S4}) aufweisen.

10. Vorrichtung nach Anspruch 9, **dadurch gekennzeichnet, dass** die vier Sujet (Sⱼ) sämtlich eine in Axialrichtung voneinander verschiedene Breite (b_{S1}; b_{S2}; b_{S3}; b_{S4}) aufweisen.

11. Vorrichtung nach Anspruch 9 oder 10, **dadurch gekennzeichnet, dass** im Bahnweg wenigstens einer der beiden Bahnen (02; 02'; 02.x; 02'.y) eine Wendeeinrichtung (26; 27) zum seitlichen Versetzen der betreffenden Bahn (02; 02'; 02.x; 02'.y) vorgesehen ist und dass insbesondere der oder einer in einem Bahnweg der mindestens zwei Bahnen (02; 02'; 02.x; 02'.y) angeordneten Wendeeinrichtung (27) eine Bay-Window-Führung (34) zugeordnet ist.

12. Vorrichtung nach Anspruch 9, 10 oder 11, **dadurch gekennzeichnet, dass** das jeweilige Druckwerk (11; 11') Bestandteil einer Druckstellengruppe (01; 01') mit mehreren mit einer selben Bahnseite der selben Bahn (02; 02'; 02.x; 02'.y) zusammen wirkenden Druckwerken (11; 11'), wobei in einer Druckstellengruppe (01; 01') mehrere der mit der selben Bahnseite der selben Bahn (02; 02'; 02.x; 02'.y) zusammen wirkenden Druckwerke (11; 11') vertikal voneinander beabstandet, insbesondere in einer als Druckturm (01; 01') ausgebildeten Druckstellengruppe (01; 01'), vorgesehen sind.

13. Zeitungsprodukt (P; p) mit mindestens einem ersten an einem Falz (Z; z) gefalteten Bogen (B1; B2; B3; B4) und einem im Inneren des ersten Bogens (B1; B2; B3; B4) liegenden zweiten gefalteten Bogen (B1; B2; B3; B4)), wobei durch die mindestens zwei Bogen (B1; B2; B3; B4) im geschlossenen Zustand des Druckproduktes (P; p) vier Lagen (L1; L2; L3; L4; L5; L6; L7; L8) mit insgesamt acht Druckseiten (Dⱼ) gebildet sind, wobei der erste und der zweite Bogen (B1; B2; B3; B4)) derart gefalzt und zueinander angeordnet sind, dass mindestens drei der vier Lagen (L1; L2; L3; L4; L5; L6; L7; L8) auf einer dem Falz (Z; z) gegenüberliegenden Seite mit ihren Seitenkanten derart versetzt zueinander angeordnet sind, sodass die Seitenbreite (b_{D,,j}) dieser zueinander mit ihren Seitenkanten versetzten Lagen (L1; L2; L3; L4; L5; L6; L7; L8) im Druckprodukt (P; p) von vorne nach hinten von Versatz (V) zu Versatz (V) stets weiter ab- oder zunimmt, und wobei mehrere erste und/oder mehrere zweite Bogen (B1; B2; B3; B4) in einer selben Weise gefaltet und ineinander angeordnet sind, und die in der selben Weise gefalteten ineinander angeordneten Bogen (B1; B2; B3; B4) zumindest im Bereich eines Produktschenkels (PS₁; PS₂) des geschlossenen Zeitungsproduktes (P; p) einen mehrlagigen Produktabschnitt (pₐ; p_{b}; p_{c}; p_{d}; pₑ; p_{f}; p_{g}; pₕ) ausbilden, welcher zu wenigstens einer benachbarten Lage (L1; L2; L3; L4; L5; L6; L7; L8) oder einem benachbarten, ebenfalls mehrlagigen Produktabschnitt (pₐ; p_{b}; p_{c}; p_{d}; pₑ; p_{f}; p_{g}; pₕ) einen Versatz (V) in der Seitenkante aufweist.

14. Zeitungsprodukt nach Anspruch 13, **dadurch gekennzeichnet, dass** es quer zum Falz (Z; z) des geschlossenen Druckproduktes (P; p) orientierte Druckseiten (Dⱼ) aufweist, insbesondere Textpassagen mit ihren Zeilen derart orientiert sind, dass sie senkrecht zum Lesefalz (Z; z) verlaufen und/oder dass durch den Versatz (V) der Seitenkanten jeweils zweier ein- oder mehrlagiger Produktabschnitte (pₐ; p_{b}; p_{c}; p_{d}) von der Rück- oder Vorderseite des am Falz (Z; z) geschlossenen Produktes (P; p) her betrachtet fächerartig mehrere sichtbare, nicht durch den vorangehenden Produktabschnitt (pₐ; p_{b}; p_{c}; p_{d}) überdeckte seitliche Druckseitenbereiche (R) gegeben sind.

## Claims

1. Method for the production of a printed product (P; p), in particular of a newspaper product (P; p), wherein
- firstly at least a first and a second web (02; 02'; 02.x; 02'.y) are produced in such a way that they carry the print images of two printed pages (Dⱼ) next to each other in each case on at least one of their pages by means of a same or by different printing units (11; 11'),
- and at least the first and the second printed web (02; 02'; 02.x; 02'.y) are led downstream for the formation of a strand (16) together on a same fold former (13; 13'),
- wherein the first and the second web (02; 02'; 02.x; 02'.y) with their web centers (M1; M2) offset laterally to each other are led to the fold former (13; 13'),
- wherein the first and the second web (02; 02'; 02.x; 02'.y) with their web centers (M1; M2) in each case offset laterally to folding plane (FE) of the fold former (13; 13') forming a fold (Z; z) are led to the fold former (13; 13')
- and wherein the first and the second web (02; 02'; 02.x; 02'.y) with side edges offset to each other on both sides to a same page, are led to the fold former (13; 13').

2. The method according to claim 1, **characterized in that** the first and the second web (02; 02'; 02.x; 02'.y) with their web centers (M1; M2) in each case offset laterally to a same side, are guided on the fold former (13; 13') to a folding plane (FE) of the fold former (13; 13').

3. The method according to claim 1 or 2, **characterized in that** the first and the second web (02; 02'; 02.x; 02'.y) are in each case printed with two printed pages (Dⱼ) of printed page width (b_{D}) different in the transverse direction in their production.

4. The method according to claim 3, **characterized in that** the second web (02; 02'; 02.x; 02'.y) is printed with print images of two printed pages (Dⱼ), of which at least one differs in its printed page width (b_{D}) from the printed page widths (b_{D}) of the printed pages (Dⱼ) printed on the first web (02; 02'; 02.x; 02'.y) or **in that** the second web (02; 02'; 02.x; 02'.y) is printed next to each other with two printed pages (Dⱼ) of two printed page widths (b_{D}), which differ from the printed page widths (b_{D}) of the printed pages (Dⱼ) printed next to each other on the first web (02; 02'; 02.x; 02'.y).

5. The method according to one or more of claims 1, 2, 3, or 4, **characterized in that** the first and the second web (02.x; 02'.y) are obtained as part webs (02.x; 02'.y) of a same original web (02, 02'), in particular printed in the still undivided state, by longitudinal cutting, or **in that** the first and the second web (02; 02'; 02.x; 02'.y) are formed by different webs (02; 02'; 02.x; 02'.y) printed in printing units (11; 11') different from each other.

6. The method according to claim 1, 2, 3, or 5, **characterized in that** as the first and second web (02; 02'; 02.x; 02'.y), webs (02; 02'; 02.x; 02'.y) of a same width (b1; b2; b3; b4) are guided to the fold former (13; 13') and/or **in that** at least one of the two webs (02; 02'; 02.x; 02'.y) is offset transverse to its longitudinal direction after printing and before running to the fold former.

7. The method according to claim 1, 2, 3, 4, 5, or 6, **characterized in that** at least a third web (02; 02'; 02.x; 02'.y) with its web center offset laterally to the folding plane (FE) forming the longitudinal fold and/or laterally offset to at least in each case one side edge of the first and the second web (02; 02'; 02.x; 02'.y) is guided to the fold former (13; 13'), and/or **in that** a number of first webs (02; 02'; 02.x; 02'.y), in particular arranged vertically adjacent to each other, are guided in a same lateral direction to the folding plane (FE) and/or to one or more second webs (02; 02'; 02.x; 02'.y), in particular vertically adjacent to each other, in a same lateral alignment to the folding plane (FE) and/or to one or more first webs (02; 02'; 02.x; 02'.y) one above the other on the fold former (13; 13').

8. The method according to claim 1, 2, 3, 4, 5, 6, or 7, **characterized in that** at least the first and second web (02; 02'; 02.x; 02'.y) are printed by printing units (11; 11') of a same printing positions group (01; 01') designed as a printing tower (01; 01'), by the webs (02; 02'; 02.x; 02'.y) or one or more original webs (02.x; 02'.y) being the basis of these in each case running essentially vertically through a number of printing units (11; 11') in succession and/or an original web (02; 02') or a number of webs (02; 02'; 02.x; 02'.y) being printed next to each other with print images of vertical printed pages (Dⱼ) in the broadsheet format.

9. An apparatus for the production of a printed product (P; p), in particular for carrying out the method for the production of a printed product (P; p) according to one or more of Claims 1 to 8, with web guiding means (24; 28; 29; 32; 33; 36), by means of which a first and a second web (02; 02'; 02.x; 02'.y)can be guided from different printing units (11; 11') or a first and second web (02.x; 02'.y) can be guided as partial webs (02.x; 02'.y) of a same original web (02; 02') from a same printing unit (11; 11') along a respective web path to a same fold former (13; 13'), and where the two different printing units (11; 11') are arranged in the web path of the two webs (02; 02'; 02.x; 02'.y) or the printing unit (11; 11') is arranged in the web path of the original web (02; 02') being the basis of the web paths (02.x; 02'.y), such that by means of the two different printing units (11; 11') the two webs (02; 02'; 02.x; 02'.y) or by means of the same printing unit (11; 11') two web strips corresponding to the downstream partial webs (02.x; 02'.y) are in each case printable next to each other with two printed pages (Dⱼ) each, and where on two printing unit cylinders (07; 07') of the printing units (11; 11') assigned to the two webs (02; 02'; 02.x; 02'.y) next to each other in each case two or on a printing unit cylinder (07; 07') of the printing unit (11; 11') assigned to the joint original web next to each other four subjects (Sⱼ) of the four printed pages (Dⱼ) are provided, **characterized in that** at least three of the four subject provided in pairs next to each other on the two printing unit cylinders (07; 07') of the two different printing units (11; 11') or at least three of the four subject (Sⱼ) arranged next to each other on the same printing unit cylinder (07; 07') of the same printing unit (11; 11') have a width (b_{S1}; b_{S2}; b_{S3}; b_{S4}) different from each other in the axial direction.

10. The apparatus according to claim 9, **characterized in that** the four subjects (Sⱼ) all have a width (b_{S1}; b_{S2}; b_{S3}; b_{S4}) different from each other in the axial direction.

11. The apparatus according to claim 9 or 10, **characterized in that** in the web path at least of one of the two webs (02; 02'; 02.x; 02'.y) a turning device (26; 27) is provided for the lateral offsetting of the web (02; 02'; 02.x; 02'.y) concerned and **in that** in particular the or a turning device (27) arranged in a web path of the at least two webs (02; 02'; 02.x; 02'.y) is assigned a bay window guide (34).

12. The apparatus according to claim 9, 10 or 11, **characterized in that** the respective printing unit (11; 11') [lacuna] part of a printing points group (01; 01') having a plurality of printing units (11; 11') interacting with a same web side of the same web (02; 02'; 02.x; 02'.y), where in one printing points group (01; 01') a plurality of the printing units (11; 11') interacting with the same web side of the same web (02; 02'; 02.x; 02'.y) spaced vertically from one another are provided, in particular in a printing points group (01; 01') designed as a printing tower (01; 01').

13. A newspaper product (P; p) having at least one first sheet (B1; B2; B3; B4) folded along a fold (Z; z) and a second folded sheet (B1; B2; B3; B4) lying in the inside of the first sheet (B1; B2; B3; B4), wherein four layers (L1; L2; L3; L4; L5; L6; L7; L8) with altogether eight printed pages (Dⱼ) are formed by the at least two sheets (B1; B2; B3; B4) in the closed state of the printed product (P; p), the first and the second sheets (B1; B2; B3; B4) being folded and arranged relative to each other such that at least three of the four layers (L1; L2; L3; L4; L5; L6; L7; L8) are arranged on a side opposite to the fold (Z; z) with their side edges offset relative to each other such that the page width (b_{D.j}) of these layers (L1; L2; L3; L4; L5; L6; L7; L8) in the printed product (P; P) from front to back from offset (V) to offset (V) always decreases or increases further, and where a number of first and/or a number of second sheets (B1; B2; B3; B4) folded in a same manner are arranged in each other, **characterized in that** the sheets (B1; B2; B3; B4) folded in the same manner arranged in each other at least in the area of a product leg (PS₁; PS₂) of the closed newspaper product (P; p) form a multilayer product section (pₐ; p_{b}; p_{c}; p_{d}; pₑ; p_{f}; p_{g}; pₕ), which has an offset (V) in the side edge to at least one adjacent position (L1; L2; L3; L4; L5; L6; L7; L8) or to an adjacent, likewise multilayer product section (pₐ; p_{b}; p_{c}; p_{d}; pₑ; p_{f}; p_{g}; pₕ).

14. The newspaper product according to claim 13, **characterized in that** it has printed pages (Dⱼ) oriented transverse to the fold (Z; z) of the closed printed product (P; p), in particular text passages with their lines oriented such that they run perpendicular to the reading fold (Z; z) and/or **in that** by means of the offset (V) of the side edges in each case two single- or multilayer product sections (pₐ; p_{b}; p_{c}; p_{d}) viewed fan-like from the back or front side of the product (P; p) closed at the fold (Z; z), a number of visible, lateral printed page areas (R) covered by the preceding product section (pₐ; p_{b}; p_{c}; p_{d}) are afforded.

## Revendications

1. Procédé de fabrication d'un produit imprimé (P ; p), en particulier d'un journal (P ; p), où
- au moins une première et une deuxième bandes (02 ; 02' ; 02.x ; 02'.y) sont d'abord produites par un même ou par différents groupes d'impression (11 ; 11') de manière que chacune porte sur au moins une de ses faces les images d'impression de deux pages imprimées (Dⱼ) côte à côte,
- et où au moins la première et la deuxième bandes imprimées (02 ; 02' ; 02.x ; 02'.y) sont guidées vers l'aval pour former un brin (16) sur un même cône plieur (13 ; 13'),
- la première et la deuxième bandes (02 ; 02' ; 02.x ; 02'.y) étant guidées vers le cône plieur (13 ; 13') en étant latéralement décalées par leurs milieux de bande (M1 ; M2) l'une par rapport à l'autre,
- la première et la deuxième bandes (02 ; 02' ; 02.x ; 02'.y) étant guidées en étant latéralement décalées par leurs milieux de bande (M1 ; M2) vers un plan de pliage (FE) du cône plieur (13 ; 13') qui forme un pli (Z ; z) sur le cône plieur (13 ; 13'),
- et la première et la deuxième bandes (02 ; 02' ; 02.x ; 02'.y) étant guidées vers le cône plieur (13 ; 13') avec des bords latéraux décalés l'un par rapport à l'autre vers un même côté de part et d'autre.

2. Procédé selon la revendication 1, **caractérisé en ce que** la première et la deuxième bandes (02 ; 02' ; 02.x; 02'.y) sont guidées vers le cône plieur (13 ; 13') en étant latéralement décalées par leurs milieux de bande (M1 ; M2) vers un même côté par rapport au plan de pliage (FE) du cône plieur (13 ; 13').

3. Procédé selon la revendication 1 ou 2, **caractérisé en ce que** la première et la deuxième bande (02 ; 02' ; 02.x ; 02'.y) sont lors de leur production imprimées chacune avec deux pages imprimées (Dⱼ) de largeurs de page (b_{D}) différentes en direction transversale.

4. Procédé selon la revendication 3, **caractérisé en ce que** la deuxième bande (02 ; 02' ; 02.x; 02'.y) est imprimée avec des images d'impression de deux pages imprimées (Dⱼ), dont au moins une se distingue par sa largeur de page (b_{D}) des largeurs (b_{D}) des pages (Dⱼ) imprimées sur la première bande (02 ; 02' ; 02.x ; 02'.y), ou **en ce que** la deuxième bande (02 ; 02' ; 02.x ; 02'.y) est imprimée avec deux pages (Dⱼ) côte à côte de deux largeur de page (b_{D}), lesquelles se distinguent des largeurs (b_{D}) des pages (Dⱼ) imprimées côte à côte sur la première bande (02 ; 02' ; 02.x ; 02'.y).

5. Procédé selon l'une ou plusieurs des revendications 1, 2, 3 ou 4, **caractérisé en ce que** la première et la deuxième bandes (02.x ; 02'.y) sont obtenues comme bandes partielles (02.x ; 02'.y) par découpe longitudinale d'une même bande d'origine (02 ; 02') notamment imprimée dans un état encore non divisé, ou **en ce que** la première et la deuxième bandes (02 ; 02' ; 02.x ; 02'.y) sont formées par différentes bandes (02 ; 02' ; 02.x ; 02'.y) imprimées dans des groupes d'impression (11 ; 11') différents.

6. Procédé selon l'une ou plusieurs des revendications 1, 2, 3 ou 5, **caractérisé en ce que** des bandes (02 ; 02' ; 02.x ; 02'.y) de même largeur (b1 ; b2 ; b3 ; b4) sont guidées comme première et deuxième bandes (02 ; 02' ; 02.x ; 02'.y) vers le cône plieur (13 ; 13') et/ou **en ce qu'**au moins une des deux bandes (02 ; 02' ; 02.x ; 02'.y) est décalée transversalement à sa direction longitudinale après l'impression et avant l'entrée de cône.

7. Procédé selon la revendication 1, 2, 3, 4, 5 ou 6, **caractérisé en ce qu'**au moins une troisième bande (02 ; 02' ; 02.x ; 02'.y) est guidée vers le cône plieur (13 ; 13') en étant latéralement décalée par son milieu de bande par rapport au plan de pliage (FE) formant le pli longitudinal et/ou latéralement décalée par rapport à au moins un bord latéral de la première et de la deuxième bandes (02 ; 02' ; 02.x ; 02'.y), et/ou **en ce que** plusieurs premières bandes (02 ; 02' ; 02.x ; 02'.y), notamment verticalement contiguës les unes aux autres, sont guidées vers le cône plieur avec le même alignement latéral par rapport au plan de pliage (FE) et/ou par rapport à une ou plusieurs deuxièmes bandes (02 ; 02' ; 02.x ; 02'.y) et/ou en **en ce que** plusieurs deuxièmes bandes (02 ; 02' ; 02.x; 02'.y), notamment verticalement contiguës les unes aux autres, sont guidées superposées vers le cône plieur (13 ; 13') avec le même alignement latéral par rapport au plan de pliage (FE) et/ou par rapport à une ou plusieurs premières bandes (02 ; 02' ; 02.x ; 02'.y).

8. Procédé selon la revendication 1, 2, 3, 4, 5, 6 ou 7, **caractérisé en ce qu'**au moins la première et la deuxième bandes (02 ; 02' ; 02.x ; 02'.y) sont imprimées par des groupes d'impression (11 ; 11') d'un même groupe de points d'impression (01 ; 01') réalisé comme tour d'impression (01 ; 01'), les bandes (02 ; 02' ; 02.x ; 02'.y) ou une ou plusieurs desdites bandes d'origine (02.x ; 02'.y) à la base de celles-ci traversant sensiblement verticalement successivement plusieurs groupes d'impression (11 ; 11'), et/ou une bande d'origine (02 ; 02') ou plusieurs bandes (02 ; 02' ; 02.x ; 02'.y) étant imprimées côte à côte avec des images d'impression de pages imprimées (Dⱼ) dressées de format broadsheet.

9. Dispositif de fabrication d'un produit imprimé (P ; p), en particulier pour l'exécution du procédé de fabrication d'un produit imprimé (P ; p) selon l'une ou plusieurs des revendications 1 à 8, avec des moyens de guidage de bande (24 ; 28 ; 29 ; 32 ; 33 ; 36), au moyen desquels une première et une deuxième bande (02 ; 02' ; 02.x ; 02'.y) peuvent être guidées depuis différents groupes d'impression (11 ; 11'), ou une première et une deuxième bandes (02.x ; 02'.y) peuvent en tant que bandes partielles (02.x ; 02'.y) d'une même bande d'origine (02 ; 02') être guidées depuis un même groupe d'impression (11 ; 11') le long d'un chemin de bande vers un même cône plieur (13 ; 13'), et où les deux groupes d'impression (11 ; 11') différents sur le chemin de bande des deux bandes (02 ; 02' ; 02.x ; 02'.y), ou le groupe d'impression (11 ; 11') sur le chemin de bande de la bande d'origine (02 ; 02') à la base des bandes partielles (02.x ; 02'.y), sont disposés et réalisés de manière que les deux bandes (02 ; 02' ; 02.x ; 02'.y) soient imprimables par les deux groupes d'impression (11 ; 11') différents, ou deux brins de bande correspondant aux bandes partielles (02.x ; 02'.y) en aval soient imprimables par le même groupe d'impression (11 ; 11'), côte à côte avec deux pages imprimées (Dⱼ), et où deux sujets sont prévus côte à côte sur deux cylindres de groupe d'impression (07 ; 07') des groupes d'impression (11 ; 11') affectés aux deux bandes (02 ; 02' ; 02.x ; 02'.y), ou quatre sujets (Sⱼ) des quatre pages imprimées (Dⱼ) sont prévus côte à côte sur un cylindre de groupe d'impression (07 ; 07') du groupe d'impression (11 ; 11') affecté à la bande d'origine commune, **caractérisé en ce qu'**au moins trois des quatre sujets prévus par paires côte à côte sur les deux cylindres de groupe d'impression (07 ; 07') des deux groupes d'impression (11 ; 11') différents, ou au moins trois des quatre sujets (Sⱼ) disposés côte à côte sur le même cylindre de groupe d'impression (07 ; 07') du même groupe d'impression (11 ; 11') présentent des largeurs (b_{S1} ; b_{S2} ; b_{S3} ; b_{S4}) différentes en direction axiale.

10. Dispositif selon la revendication 9, **caractérisé en ce que** les quatre sujets (Sⱼ) ont tous des largeurs (b_{S1} ; b_{S2} ; b_{S3} ; b_{S4}) différentes en direction axiale.

11. Dispositif selon la revendication 9 ou 10, **caractérisé en ce que** sur le chemin de bande d'au moins une des deux bandes (02 ; 02' ; 02.x ; 02'.y), il est prévu un dispositif de retournement (26 ; 27) pour le décalage latéral de la bande (02 ; 02' ; 02.x; 02'.y) correspondante, et **en ce qu'**un guidage bay window (34) est associé en particulier au dispositif de retournement, ou à un dispositif de retournement (27) prévu sur un chemin de bande des au moins deux bandes (02 ; 02' ; 02.x ; 02'.y).

12. Dispositif selon la revendication 9, 10 ou 11, **caractérisé en ce que** chaque groupe d'impression (11 ; 11') est un composant d'un groupe de points d'impression (01 ; 01') avec plusieurs groupes d'impression (11 ; 11') coopérant avec une même face de la même bande (02 ; 02' ; 02.x ; 02'.y), plusieurs des groupes d'impression (11 ; 11') coopérant avec la même face de bande de la même bande (02 ; 02' ; 02.x; 02'.y) étant prévus verticalement espacés entre eux dans un groupe de points d'impression (01 ; 01'), en particulier dans un groupe de points d'impression (01 ; 01') réalisé comme tour d'impression (01 ; 01').

13. Journal (P ; p) avec au moins une première feuille (B1 ; B2 ; B3 ; B4) pliée sur un pli (Z ; z) et une deuxième feuille (B1 ; B2 ; B3 ; B4) pliée disposée à l'intérieur de la première feuille (B1 ; B2 ; B3 ; B4), où quatre couches (L1 ; L2 ; L3 ; L4 ; L5 ; L6 ; L7 ; L8) avec au total huit pages imprimées (Dⱼ) sont formées par les au moins deux feuilles (B1 ; B2 ; B3 ; B4) en état de fermeture du produit imprimé (P ; p), où la première et la deuxième feuille (B1 ; B2 ; B3 ; B4) sont pliées et disposées l'une par rapport à l'autre de telle manière qu'au moins trois des quatre couches (L1 ; L2 ; L3 ; L4 ; L5 ; L6 ; L7 ; L8) soient décalées entre elles par leurs bords latéraux sur une face opposée au pli (Z ; z), si bien que la largeur de page (b_{D,j}) desdites couches (L1 ; L2 ; L3 ; L4 ; L5 ; L6 ; L7 ; L8) décalées entre elles par leurs bords latéraux diminue ou augmente toujours de l'avant vers l'arrière de décalage (V) en décalage (V) dans le produit imprimé (P ; p), et où plusieurs premières et/ou plusieurs deuxièmes feuilles (B1 ; B2 ; B3 ; B4) sont de la même manière pliées et disposées à l'intérieur les unes des autres, et les feuilles (B1 ; B2 ; B3 ; B4) pliées et disposées à l'intérieur les unes des autres de la même manière forment, au moins au niveau d'un côté de produit (PS₁ ; PS₂) du produit imprimé (P ; p) fermé, une section de produit (pₐ ; p_{b} ; p_{c} ; p_{d} ; pₑ ; p_{f} ; p_{g} ; pₕ) à plusieurs couches qui présente un décalage (V) sur le bord latéral par rapport à au moins une couche (L1 ; L2 ; L3 ; L4 ; L5 ; L6 ; L7 ; L8) contiguë ou à une section de produit (pₐ ; p_{b} ; p_{c} ; p_{d} ; pₑ ; p_{f} ; p_{g} ; pₕ) contiguë, également à plusieurs couches.

14. Journal selon la revendication 13, **caractérisé en ce qu'**il présente des pages imprimées (Dⱼ) orientées transversalement au pli (Z ; z) du produit imprimé (P ; p) fermé, en particulier des passages de texte dont les lignes sont orientées de manière à s'étendre perpendiculairement au pli de lecture (Z ; z), et/ou **en ce que**, du fait du décalage (V) des bords latéraux de deux sections de produit (pₐ ; p_{b} ; p_{c} ; p_{d}) à une ou à plusieurs couches, plusieurs zones latérales (R) visibles de pages imprimées, non couvertes par la section de produit (pₐ ; p_{b} ; p_{c} ; p_{d}) précédente sont présentées en éventail, vues de la première page ou de la dernière page du produit (P ; p) fermé sur le pli (Z ; z).
